(19)

**Europäisches Patentamt**
**European Patent Office**
**Office européen des brevets**

(11)  **EP 4 068 694 B1**

(12)  **EUROPEAN PATENT SPECIFICATION**

(45) Date of publication and mention
of the grant of the patent:
**10.09.2025  Bulletin 2025/37**

(21) Application number: **20901580.9**

(22) Date of filing: **17.12.2020**

(51) International Patent Classification (IPC):
**H04L 12/28** (2006.01)

(52) Cooperative Patent Classification (CPC):
**H04L 12/2807; H04L 12/2816; H04L 63/0853;**
**H04L 67/125; H04L 67/306; H04L 67/55;**
H04L 67/02; H04L 67/10; H04L 67/562; H04L 69/22

(86) International application number:
**PCT/CN2020/137131**

(87) International publication number:
**WO 2021/121305 (24.06.2021 Gazette 2021/25)**

(54) **METHOD FOR MANAGING SMART DEVICE, MOBILE TERMINAL, AND COMMUNICATION SYSTEM**

VERFAHREN ZUR VERWALTUNG EINER INTELLIGENTEN VORRICHTUNG, MOBILES ENDGERÄT UND KOMMUNIKATIONSSYSTEM

PROCÉDÉ DE GESTION DE DISPOSITIF INTELLIGENT, TERMINAL MOBILE ET SYSTÈME DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **19.12.2019  CN 201911318926**

(43) Date of publication of application:
**05.10.2022  Bulletin 2022/40**

(73) Proprietor: **Petal Cloud Technology Co., Ltd.
Dongguan, Guangdong 523799 (CN)**

(72) Inventor: **WANG, Changjian
Shenzhen, Guangdong 518129 (CN)**

(74) Representative: **Pfenning, Meinig & Partner mbB
Patent- und Rechtsanwälte
Theresienhöhe 11a
80339 München (DE)**

(56) References cited:
**EP-A1- 3 965 374         CN-A- 106 487 622
CN-A- 107 995 215      CN-A- 108 809 968
CN-A- 109 756 404      CN-A- 109 756 404
CN-A- 110 166 439      CN-A- 110 166 439
CN-A- 110 336 720      CN-A- 111 162 975
US-A1- 2018 107 440**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

This application relates to the field of mobile communication, and in particular, to a smart device management method, a mobile terminal, and a communication system.

### BACKGROUND

With rapid development of the Internet of Things (internet of tings, IOT) industry, more smart devices (for example, a smart desk lamp, a smart air conditioner, a smart curtain, and a smart speaker) are used in people's life. A user may manage a plurality of different smart devices by using a mobile terminal (for example, a mobile phone or a tablet computer). For example, the user may set a turn-on time point or a turn-off time point of a smart desk lamp by using an application on the mobile phone. For another example, the user may further set, on the mobile phone, a time period (for example, 18:00 to 20:00) within which a smart speaker plays music.

In the conventional technology, a user may further share a smart device with another person (for example, a friend or a family member), so that the another person controls the smart device, for example, turns on or turns off the smart device. Generally, the user first manually and accurately enters an account of the another person on a mobile phone, and then sends, to the another person through the Internet, a message indicating whether to agree to accept sharing. After the user agrees, the user can control the smart home device, for example, turns on or turns off the smart home device. However, the foregoing sharing operation has many steps and is error-prone. For example, if the user forgets the account of the friend of the user or enters an incorrect account, a sharing failure may occur. Consequently, efficiency of sharing the smart device by using the mobile terminal is greatly reduced.

CN 110 166 439 A discloses that a server receives a device sharing request sent by the first terminal, sends feedback information including device information of at least one sharable device and identity information of at least one second terminal, and receives a sharing instruction sent from the first terminal.

CN 109 756 404 A discloses a method comprising the steps: receiving a control right request instruction sent by a second terminal, and sending the control right request instruction to a first terminal.

CN 107 995 215 A discloses that a server receives a control instruction sent by the control device for controlling the controlled device and parses the permission identifier and the device identifier of the controlled device from the control instruction.

CN 110 336 720 A discloses that a first electronic device receives a first user operation, and in response to the first user operation, the first electronic device sends an authorization request to the device server, where the authorization request is used to request to generate an authorization code of the home device.

### SUMMARY

The present invention is set out in the appended set of claims. An objective of this application is to provide a method and an apparatus for sharing control permission on a smart device, so that a user can quickly and conveniently share management permission on the smart device. In this application, efficiency of sharing the management permission on the smart device is improved, and user experience is improved.

The foregoing objective and other objectives are achieved by using features in independent claims. Further implementations are embodied in dependent claims, the specification, and the accompanying drawings.

According to a first aspect, a smart device management communication system is provided. The communication system includes a first mobile terminal, a second mobile terminal, a smart device, and a router. The first mobile terminal, the second mobile terminal, and the smart device each establish a Wi-Fi link to a Wi-Fi router. The first mobile terminal is configured to manage the smart device, for example, remotely control the smart device to power on, sleep, or power off. The router performs similarity comparison on first connection information and second connection information based on the first connection information generated when the first mobile terminal is connected to the router and the second connection information generated when the second mobile terminal is connected to the router. Connection information comprises a connection time point and connection duration. If a similarity reaches a first threshold, the router sends prompt information to the first mobile terminal. It may be understood that the router may further determine whether the second connection information meets a specific condition that is, for example, the second terminal is connected to the router for a plurality of times, and if the specific condition is met, the router sends the prompt information to the first mobile terminal. The prompt information is used to prompt whether to share management permission on the smart device with the second mobile terminal.

In a possible implementation, the communication system may further include a smart device management server. The device management server is configured to remotely manage the first mobile terminal, the smart device, and the network device through a first communication network.

In a possible implementation, the first mobile terminal, the second mobile terminal, and the smart device are separately connected to the network device through a second communication network.

In a possible implementation, the second communication network is a Wi-Fi network, and the network device is a Wi-Fi wireless router.

In a possible implementation, the first communication network is a cellular network.

In a possible implementation, the prompt information includes management permission information and smart device identification information. The management permission information includes control permission, view permission, addition and deletion permission, and borrowing permission. The smart device identification information includes a name of the smart device, an address of the smart device, and a serial number of the smart device.

In a possible implementation, the control permission includes adjustment, turning on, turning off, power-on, power-off, and sleep.

The view permission includes viewing a status and viewing an identifier of the smart device.

The addition and deletion permission includes adding the smart device and deleting the smart device.

The borrowing permission includes borrowing time period information.

In a possible implementation, the prompt information is further used to prompt a user whether to cancel the management permission that is on the smart device and that the second mobile terminal has.

In a possible implementation, the system further includes an application server. The application server is configured to provide an online accommodation reservation service for the user through the first communication network. A client of a first application is installed on the first mobile terminal, and the client of the first application is installed on the second mobile terminal.

The second mobile terminal is further configured to send online reservation request information to the application server through the first communication network. The request information is used to request the user of the first mobile terminal to provide an accommodation service.

The application server is further configured to send the request information to the first mobile terminal through the first communication network.

The first mobile terminal is further configured to receive the request information, and send confirmation information to the application server in response to an input of the user. The confirmation information is used to prompt the user whether to share the management permission on the smart device with the second mobile terminal.

In a possible implementation, the application server is further configured to send the request information to the network device through the first communication network.

The network device is further configured to receive the request information, and send the confirmation information to the application server in response to the input of the user. The confirmation information is used to prompt the user whether to share the management permission on the smart device with the second mobile terminal.

According to a second aspect, a router is provided. The network device includes a transceiver, a memory, and a processor.

The transceiver is configured to obtain first connection information generated when a first terminal is connected to the network device or second connection information generated when a second terminal is connected to the network device.

The memory is configured to store the first connection information or the second connection information.

The processor is configured to send prompt information to the first mobile terminal based on the first connection information or the second connection information. The prompt information is used to prompt the first mobile terminal whether to share management permission on a smart device with another mobile terminal.

In a possible implementation, the first connection information includes a first connection record generated when the first terminal is connected to the network device. The second connection information includes a second connection record generated when the second mobile terminal is connected to the network device.

In a possible implementation, sending the prompt information to the first mobile terminal based on the first connection information and the second connection information specifically includes:

determining whether a similarity between the first connection record and the second connection record reaches a first threshold; and
sending the prompt information to the first mobile terminal when the similarity reaches the first threshold.

In a possible implementation, the prompt information includes identification information and control permission information of the smart device and identification information of the second mobile terminal.

In a possible implementation, the prompt information is sent to the first mobile terminal based on that the second connection information meets a specific condition.

The specific condition is that the second mobile terminal is connected to the network device for a plurality of times.

The prompt information is used to prompt a user whether to share the management permission on the smart device with the second mobile terminal.

In a possible implementation, the network device, the first terminal, and the smart device are managed by a device management server through a first communication network.

In a possible implementation, the first mobile terminal, the second mobile terminal, and the smart device are separately connected to the network device through a second communication network.

In a possible implementation, the second communication network is a Wi-Fi network, and the network device is a Wi-Fi wireless router.

In a possible implementation, the first communication network is a cellular network.

In a possible implementation, the prompt information includes management permission information and smart device identification information. The management permission information includes control permission, view permission, addition and deletion permission, and borrowing permission. The smart device identification information includes a name of the smart device, an address of the smart device, and a serial number of the smart device.

In a possible implementation, the control permission includes adjustment, turning on, turning off, power-on, power-off, and sleep.

The view permission includes viewing a status and viewing an identifier of the smart device.

The addition and deletion permission includes adding the smart device and deleting the smart device.

The borrowing permission includes borrowing time period information.

In a possible implementation, the prompt information is further used to prompt the user whether to cancel the management permission that is on the smart device and that the second mobile terminal has.

In a possible implementation, an application server is configured to provide an online accommodation reservation service for the user through the first communication network. A client of a first application is installed on the first mobile terminal, and the client of the first application is installed on the second mobile terminal.

The second mobile terminal is further configured to send online reservation request information to the application server through the first communication network. The request information is used to request the user of the first mobile terminal to provide an accommodation service.

The application server is further configured to send the request information to the network device through the first communication network.

The network device receives the request information, and sends confirmation information to the application server in response to an input of the user. The confirmation information is used to prompt the user whether to share the management permission on the smart device with the second mobile terminal.

According to a third aspect, a mobile terminal is provided. The mobile terminal includes a first mobile terminal and a second mobile terminal.

In a possible manner, the first mobile terminal has control permission on a smart device, and the second mobile terminal has no control permission on the smart device.

Both the first mobile terminal and the second mobile terminal are connected to a router. The router records first connection information and second connection information that are generated during connections. The first connection information and the second connection information each include a connection time point, connection duration, and the like. The router analyzes a similarity between the first connection information and the second connection information. If the similarity reaches a specific threshold, the router sends prompt information to the first mobile terminal. The prompt information is used to prompt a user whether to share management permission on the smart device with the second mobile terminal.

According to a fourth aspect, a smart device management method is further provided. A first mobile terminal is connected to a network device, a second mobile terminal is connected to the network device, and a smart device is connected to the network device. The first mobile terminal is configured to manage the smart device by using the network device. The network device is configured to send prompt information to the first mobile terminal based on first connection information generated when the first terminal is connected to the network device or second connection information generated when the second terminal is connected to the network device. The prompt information is used to prompt whether to share management permission on the smart device with the second mobile terminal.

In a possible manner, the first connection information includes a first connection record generated when the first terminal is connected to the network device. The second connection information includes a second connection record generated when the second mobile terminal is connected to the network device.

In a possible manner, that the network device sends the prompt information to the first mobile terminal based on the first connection information and the second connection information specifically includes:

determining whether a similarity between the first connection record and the second connection record reaches a first threshold; and
sending, by the network device, the prompt information to the first mobile terminal when the similarity reaches the first threshold.

In a possible manner, the prompt information includes identification information and control permission information of the smart device and identification information of the second mobile terminal.

In a possible manner, the first mobile terminal is further configured to:

receive an input of a user; and
in response to the input, share, with the second mobile terminal, control permission selected by the user.

In a possible manner, the network device is configured to send the prompt information to the first mobile terminal based on that the second connection information meets a specific condition.

The specific condition is that the second mobile terminal is connected to the network device for a plurality of times.

The prompt information is used to prompt whether to share the management permission on the smart device with the second mobile terminal.

In a possible manner, the system further includes a device management server. The device management server is configured to remotely manage the first mobile terminal, the smart device, and the network device through a first communication network.

In a possible manner, the first mobile terminal, the second mobile terminal, and the smart device are separately connected to the network device through a second communication network.

In a possible manner, the second communication network is a Wi-Fi network, and the network device is a Wi-Fi wireless router.

In a possible manner, the first communication network is a cellular network.

In a possible manner, the prompt information includes management permission information and smart device identification information. The management permission information includes control permission, view permission, addition and deletion permission, and borrowing permission.

The smart device identification information includes:

a name of the smart device, an address of the smart device, and a serial number of the smart device.

In a possible manner, the control permission includes adjustment, turning on, turning off, power-on, power-off, and sleep.

The view permission includes viewing a status and viewing an identifier of the smart device.

The addition and deletion permission includes adding the smart device and deleting the smart device.

The borrowing permission includes borrowing time period information.

In a possible manner, the prompt information is further used to prompt whether to cancel the management permission that is on the smart device and that the second mobile terminal has.

In a possible manner, the system further includes an application server. The application server is configured to provide an online accommodation reservation service for the user through the first communication network. A client of a first application is installed on the first mobile terminal, and the client of the first application is installed on the second mobile terminal.

The second mobile terminal is further configured to send online reservation request information to the application server through the first communication network. The request information is used to request the user of the first mobile terminal to provide an accommodation service.

The application server is further configured to send the request information to the first mobile terminal through the first communication network.

The first mobile terminal is further configured to receive the request information, and send confirmation information to the application server in response to an input of the user. The confirmation information is used to prompt whether to share the management permission on the smart device with the second mobile terminal.

In a possible manner, the application server is further configured to send the request information to the network device through the first communication network.

The network device is further configured to receive the request information, and send the confirmation information to the application server in response to the input of the user. The confirmation information is used to prompt whether to share the management permission on the smart device with the second mobile terminal.

According to a fifth aspect, a smart device management apparatus is further provided. The apparatus has a function of implementing the method according to the fourth aspect. The function may be implemented by hardware, or may be implemented by hardware executing corresponding software. The hardware or the software may include one or more modules or units corresponding to the function.

According to a sixth aspect, a computer-readable storage medium is further provided. The computer-readable storage medium stores instructions. When the instructions are run on a computer (for example, a mobile phone or a tablet computer), the computer is enabled to perform the method according to the fourth aspect.

According to a seventh aspect, a method for using a smart device management network device is further provided. The network device may be a router, and the network device is connected to a first mobile terminal.

The network device is connected to a second mobile terminal.

The network device is connected to a smart device, and the first mobile terminal manages the smart device by using the network device.

The network device sends prompt information to the first mobile terminal based on obtained first network information of the first mobile terminal or obtained second network information of the second mobile terminal. The prompt information is used to prompt the first mobile terminal whether to share management permission on the smart device with the second mobile terminal.

In a possible manner, the first network information includes first connection information generated when the first mobile terminal is connected to the network device, and the second network information includes second connection information generated when the second mobile terminal is connected to the network device.

The network device is configured to send the prompt information to the first mobile terminal based on the first connection information and the second connection information, and the prompt information is used to prompt the first mobile terminal whether to share the management permission on the smart device with the second mobile terminal.

In a possible manner, that the network device sends the prompt information to the first mobile terminal based on the first connection information and the second connection information specifically includes:

determining whether a similarity between the first connection information and the second connection information reaches a first threshold; and
sending, by the network device, the prompt information to the first mobile terminal when the similarity reaches the first threshold.

In a possible manner, the first network information includes the first connection information generated when the first mobile terminal is connected to the network device.

The network device is configured to send the prompt information to the first mobile terminal based on the first connection information. The prompt information is used to prompt whether to share the management permission on the smart device with the second mobile terminal.

In a possible manner, the first network information includes confirmation information, and the confirmation information is order information of an online accommodation reservation.

A first application is installed on the first mobile terminal, the first application is installed on the second mobile terminal, and the first application is used to provide an online accommodation reservation. The second mobile terminal is further configured to send the confirmation information to an application server through the second communication network. The application server is further configured to receive the confirmation information, and send the confirmation information to the first mobile terminal. The first mobile terminal is further configured to receive the confirmation information, and send the confirmation information to the network device.

That the network device is configured to send the prompt information to the first mobile terminal based on the confirmation information is specifically:

The network device is configured to receive the confirmation information, and send the prompt information to the first mobile terminal based on the confirmation information. The prompt information is used to prompt whether to share the management permission on the smart device with the second mobile terminal.

In a possible manner, the first connection information includes confirmation information.

A first application is installed on the first mobile terminal, the first application is installed on the second mobile terminal, and the first application is installed on the network device. The first application is used to provide an online accommodation reservation. The second mobile terminal is further configured to send the confirmation information of an online reservation to an application server through a second communication network. The application server is further configured to receive the confirmation information, and send the confirmation information to the network device.

That the network device is configured to send the prompt information to the first mobile terminal based on the confirmation information is specifically:

The network device is configured to receive the confirmation information, and send the prompt information to the first terminal based on the confirmation information. The prompt information is used to prompt whether to share the management permission on the smart device with the second mobile terminal.

It should be understood that descriptions of technical features, technical solutions, beneficial effects, or similar words in this application do not imply that all features and advantages can be implemented in any individual embodiment. On the contrary, it may be understood that descriptions of the features or the beneficial effects mean that one or more embodiments include a specific technical feature, technical solution, or beneficial effect. Therefore, the descriptions of the technical features, the technical solutions, or the beneficial effects in this specification may not necessarily belong to one embodiment. Further, the technical features, the technical solutions, and the beneficial effects described in embodiments may be combined in any proper manner. A person skilled in the art understands that an embodiment may be implemented without one or more specific technical features, technical solutions, or beneficial effects in a specific embodiment. In other embodiments, additional technical features and beneficial effects may be further identified in a specific embodiment that does not reflect all embodiments.

## BRIEF DESCRIPTION OF DRAWINGS

FIG. 1 is a schematic composition diagram of a communication system according to an embodiment of this application;

FIG. 2 is a schematic composition diagram of another communication system according to an embodiment of this application;

FIG. 3 is a schematic composition diagram of still another communication system according to an embodiment of this application;

FIG. 4 is a schematic diagram of a network architecture of a smart home according to an embodiment of this application;

FIG. 5 is a schematic composition diagram of a communication system according to an embodiment of this application;

FIG. 6 is a schematic diagram of a related interface on which a smart terminal shares control permission on a smart device according to an embodiment of this application;

FIG. 7 is a schematic composition diagram of a smart home system according to an embodiment of this application;

FIG. 8 is a schematic composition diagram of a smart office system according to an embodiment of this application;

FIG. 9 is a schematic diagram of a related interface on which a smart terminal shares control permission on a smart device according to an embodiment of this application;

FIG. 10 is a schematic diagram of information storage in a database according to an embodiment of this application;

FIG. 11 is a schematic diagram of a structure of a header of a data packet in a communication system according to an embodiment of this application;

FIG. 12A is a schematic diagram of a structure of hardware of a mobile terminal according to an embodiment of this application;

FIG. 12B is a schematic diagram of a structure of hardware of a router according to an embodiment of this application;

FIG. 12C is a schematic diagram of a structure of hardware of a smart device according to an embodiment of this application;

FIG. 13A and FIG. 13B are a schematic flowchart of a method for sharing management permission on a smart device according to an embodiment of this application;

FIG. 14A is a schematic diagram of a user interface on which management permission on a smart device is obtained through network payment according to an embodiment of this application;

FIG. 14B is a schematic flowchart of a method for obtaining management permission on a smart device through network payment according to an embodiment of this application; and

FIG. 15 is a schematic diagram of a network architecture for quickly sharing management permission on a smart device by using a room reservation APP according to an embodiment of this application.

## DESCRIPTION OF EMBODIMENTS

Terms used in the following embodiments are merely intended to describe specific embodiments, but are not intended to limit this application. Terms "one", "a", "the", "the foregoing", "this", and "the one" of singular forms used in this specification and the appended claims of this application are also intended to include expressions such as "one or more", unless otherwise specified in the context clearly. It should be further understood that, in the following embodiments of this application, "at least one" and "one or more" refer to one, two, or more. The term "and/or" is used to describe an association between associated objects, and represents that there may be three relationships. For example, A and/or B may represent the following cases: Only A exists, both A and B exist, and only B exists, where A and B may be singular or plural. The character "/" generally indicates an "or" relationship between associated objects.

Reference to "an embodiment", "some embodiments", or the like described in this specification means that one or more embodiments of this application include a specific feature, structure, or characteristic described with reference to the embodiment. Therefore, in this specification, statements "in an embodiment", "in some embodiments", "in some other embodiments", "in other embodiments", and the like that appear at different places do not necessarily mean referring to a same embodiment, instead, the statements mean referring to "one or more but not all of the embodiments", unless otherwise specifically emphasized in other ways. Terms "include", "comprise", "have", and variants of the terms all mean "include but are not limited to", unless otherwise specifically emphasized in other ways.

In the conventional technology, a user may share a smart device (for example, a smart desk lamp, a smart air conditioner, a smart curtain, or a smart speaker) with another person (for example, a friend or a family member), so that the another person manages the smart device (for example, turns on or turns off the smart device). Generally, the user first manually and accurately enters an account of the another person on a mobile phone, and then sends, to the another person through the Internet, a message indicating whether to agree to accept sharing. After the user agrees, the user can control the smart home device, for example, turns on or turns off the smart home device. However, the foregoing sharing operation has many steps and is error-prone. For example, if the user forgets the account of the friend of the user or enters an incorrect account, a sharing failure may occur. Consequently, efficiency of sharing the smart device is greatly reduced.

To resolve the foregoing technical problem, the following embodiments of this application provide a smart device management method, a mobile terminal, and a communication system, to effectively reduce steps of a sharing operation, and avoid a technical problem that a smart device cannot be shared because a user forgets a related account, so as to greatly improve efficiency of sharing the smart device.

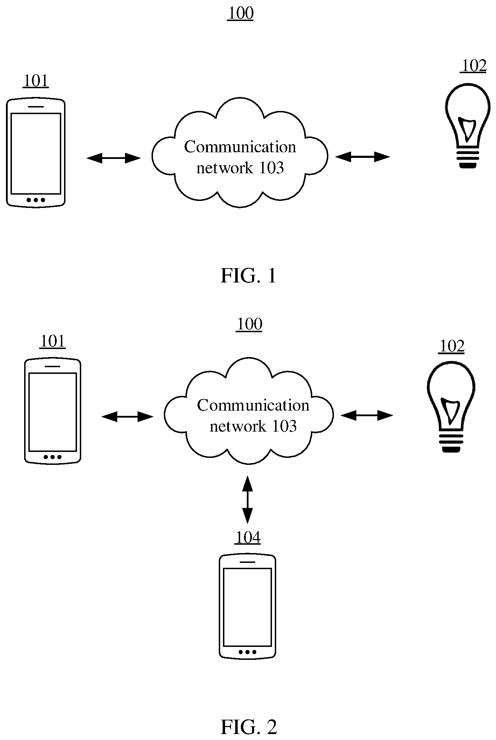

An embodiment of this application provides a smart device management communication system. The communication system may include at least one mobile terminal and at least one smart device. For example, as shown in FIG. 1, a communication system 100 may include a mobile terminal 101 and a smart device 102. The mobile terminal 101 may communicate with the smart device 102 through a communication network 103, and the mobile terminal 101 may manage the smart device 102 through the communication network 103. For example, the mobile terminal 101 may delete the smart device 102 from a managed device list through the communication network 103, to lose control on the smart device 102. For another example, the mobile terminal 101 may restore the deleted smart device 102 to the managed device list, to re-obtain control permission on the smart device 102. For another example, the mobile terminal 101 may control turning on and turning off of the smart device 102, to control the smart device 102. For another example, the mobile terminal 101 may add the smart device 102 to the managed device list of the mobile terminal 101, to manage the smart device 102. For example, Table 1 shows control information of the mobile terminal 101 for the smart device 102.

**Table 1**

| Sequence number | Management instruction | Meaning |
|---|---|---|
| 1 | DEL | Delete a smart device |
| 2 | REC | Restore a smart device |
| 3 | SWITCH | Turn on or turn off a smart device |
| 4 | ADD | Add a smart device |

For example, the communication network 103 may be a local area network (local area networks, LAN), or may be a wide area network (wide area networks, WAN), for example, the Internet. The communication network 103 may be implemented by using any known network communication protocol or communication technology. The network communication protocol or the communication technology may be, for example, the Ethernet, a universal serial bus (universal serial bus, USB), FireWire (FIREWIRE), a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), Bluetooth, wireless fidelity (wireless fidelity, Wi-Fi), near field communication (near field communication, NFC), voice over Internet protocol (voice over Internet protocol, VoIP), a transmission control protocol (transmission control protocol, TCP), an Internet protocol (internet protocol, IP), a user datagram protocol (user datagram protocol, UDP), a hypertext transfer protocol (hypertext transfer protocol, HTTP), a constrained application protocol (constrained application protocol, CoAP), a message queuing telemetry transport (message queuing telemetry transport, MQTT) protocol, radio frequency identification (radio frequency identification, RFID), ZigBee (ZigBee®), long range (long range, LoRa®), a narrowband Internet of Things (narrowband Internet of Things, NB-IoT), a communication protocol that supports a network slicing architecture, or any other appropriate communication protocol or technology. It may be understood that the mobile terminal 101 may include but is not limited to an electronic device, for example, a mobile phone, a tablet computer, a wearable electronic device (for example, a smartwatch or a smart band) having a wireless communication function, or a vehicle-mounted computer that uses iOS®, Android®, Windows®, or another operating system. The mobile terminal 101 may alternatively be another portable electronic device, for example, a laptop (Laptop). It should be understood that, in some other embodiments, the mobile terminal 101 may alternatively be a desktop computer. In addition, a specific structure of the mobile terminal 101 is described in detail in the following embodiments. It may be understood that the smart device 102 may include but is not limited to a smart device having a wireless communication function, for example, a smart bulb, a smart lock, or a smart socket.

In some other embodiments, the communication system may further include another mobile terminal. For example, as shown in FIG. 2, the communication system 100 may further include a mobile terminal 104. The mobile terminal 101 may communicate with the mobile terminal 104 through the communication network 103, for example, send a text message, a voice message, a multimedia message, or another message. The mobile terminal 101 may manage the smart device 102 through the communication network 103. The mobile terminal 104 may also share the smart device 102 with the mobile terminal 104 through the communication network 103, so that the mobile terminal 104 can also control the smart device 102 to some extent.

For example, the mobile terminal 104 may request, through the communication network 103, the mobile terminal 101 to lend the smart device 102 to the mobile terminal 104 for use in a future time period (for example, from December 23 to December 25, 2019). To be specific, the mobile terminal 104 may request an administrator (the mobile terminal 101) of the smart device 102 to obtain control permission on the smart device 102. After receiving the request, the mobile terminal 101 may process the request based on historical information or based on a received user operation, for example, reject the request or accept the request. It may be understood that the mobile terminal 104 cannot control the smart device 102 at another time point that is not within the time period. For example, before the time period arrives or after the time period elapses, the mobile terminal 104 cannot implement an operation, for example, power-on, power-off, or sleep, on the smart device 102. It may be understood that the word "lend" is intended to represent the technical solution provided in this embodiment, but the name constitutes no limitation on this application.

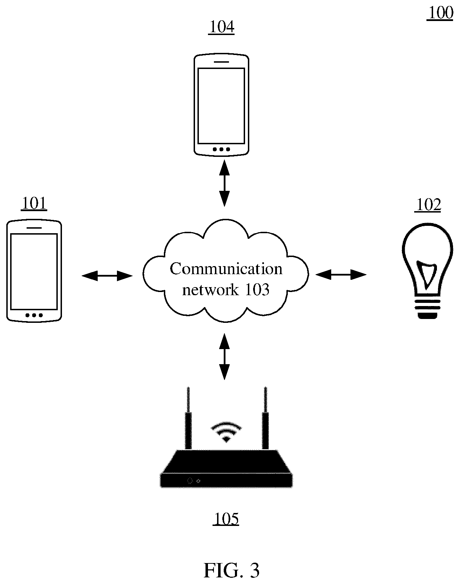

In some other embodiments, the communication system may further include a router. For example, as shown in FIG. 3, the communication system 100 may include the mobile terminal 101, the mobile terminal 104, the smart device 102, and a router 105. For example, the router 105 may be a Wi-Fi router. In this way, the router 105 may serve as a Wi-Fi access point, and form a Wi-Fi local area network with the mobile terminal 101, the mobile terminal 104, and the smart device 102. To be specific, the communication network 103 is a Wi-Fi network. As the administrator, the mobile terminal 101 may manage the smart device 102. For example, the router 105 may be a wireless router, a wired router, an edge router, or a core router. The router may provide routing and forwarding functions. The router 105 may record network log information of the mobile terminal 101, the mobile terminal 104, and the smart device 102. The network log information includes but is not limited to an electronic device name, a device identifier (DeviceID), online duration, an access time point, an offline time point, and the like. In some other embodiments, the network log information may further include management identifiers of the mobile terminal 101 and the smart device 102. For example, the mobile terminal 101 serves as the administrator of the smart device 102, and the smart device 102 serves as a managed device of the mobile terminal 101.

**Table 2**

| Sequence number | Device name | Device identifier | Access time point | Offline time point | Online Duration | Day of a week | Management identifier | Instruction | Remarks |
|---|---|---|---|---|---|---|---|---|---|
| 1 | Mobile terminal 101 | 86803403155674 | 201910010101 | 201910010808 | 7h7min | Thursday | Administrator | | |
| 2 | Mobile terminal 101 | 86803403155674 | 201910020101 | 201910020909 | 8h8min | Friday | Administrator | SWITCH | Turning on |
| 3 | Smart device 102 | 00-16-EA-AE-3C-40 | 201909090909 | | - | - | Device | - | - |
| 4 | Mobile terminal 105 | 86803403158269 | 201910010101 | 201910011010 | 9h9min | Thursday | Non-administrator | - | - |
| 5 | Mobile terminal 105 | 86803403158269 | 201910020101 | 201910031010 | 33h9min | Friday | Non-administrator | - | - |
| ... | ... | ... | ... | | ... | ... | ... | ... | ... |

It may be understood that Table 2 is merely used as an example to describe content of network status information that is of each electronic device and that is recorded by the router 105. A person skilled in the art may understand that the information expressed in Table 1 may be recorded (or stored) in a memory of the router 105 in various manners, and may be read, invoked, or the like by a processor or another component of the router 105. Therefore, in this embodiment of this application, recording/storing the information in Table 2 is not limited to the foregoing list form.

For example, the router 105 may calculate a behavior association between the mobile terminal 101 and the mobile terminal 104 based on the information in Table 2. For example, the router 105 uses a term frequency-inverse document frequency (term frequency-inverse document frequency, TF-IDF) algorithm and a cosine similarity algorithm to calculate the behavioral association between the mobile terminal 101 and the mobile terminal 104. First, the TF-IDF algorithm is used to extract a keyword in the network log information, which includes: (1). Count a term frequency (TF), and count a quantity of occurrences of each word in the network log information. A high occurrence frequency indicates that the word may become a keyword. Filter out stop words such as "of", "yes", and "in". (2). Introduce a reverse document frequency. It may be understood that the IDF is an importance weight of a word. If a word appears less frequently, a weight of the word is higher. (3). Use TF×IDF to describe importance of a word. Details are as follows.

Calculate the TF:

$$\text{(a)} \ \ \text{TF} = {i}/{n}$$

In the formula a, i indicates a quantity of occurrences of a word in the log information, and n indicates a total quantity of words in a log.

$$\text{(b)} \ \ \text{TF} = {i}/{m}$$

In the formula b, i is a quantity of occurrences of a word in the log information, and m is a quantity of occurrences of a word that appears most frequently in the log.

Calculate the IDF:

$$\text{(c)} \ \ \text{IDF} = \log\left({u}/{(k+1)}\right)$$

In the formula c, u is a total quantity of documents in a corpus (corpus), and the corpus is used to simulate a use environment of a log word. k is a quantity of documents that include the word.

Calculate TF-IDF:

$$\text{(d)} \ \ \text{TF} - \text{IDF} = \text{TF} \times \text{IDF}$$

It can be seen from a TF-IDF value that TF-IDF is in direct proportion to a quantity of occurrences of a word in the log, and is in inverse proportion to a quantity of occurrences of the word in an entire log use environment.

(4). Sort fields in descending order based on TF-IDF values of various fields in the network log information, and select several top fields.

Then, determine a similarity between the network log information of the mobile terminal 101 and the network log information of the mobile terminal 104 based on the cosine similarity algorithm. Respectively combine several key fields, found by using the TF-IDF algorithm, into a set, respectively calculate word frequencies of the fields in respective sets in the network log information of the mobile terminal 101 and the mobile terminal 104, generate two term frequency vectors of the network log information, and calculate a cosine similarity between the two vectors by using a formula (e). A larger value indicates a higher similarity.

The cosine similarity:

$$\text{(e)} \ \ \cos\theta = \frac{\sum_{i=1}^{n}(A_i \times B_i)}{\sqrt{\sum_{i=1}^{n}(A_i)^2} \times \sqrt{\sum_{i=1}^{n}(B_i)^2}}$$

In the formula (e), $A_i$ represents a term frequency vector of the mobile terminal 101, and i represents a quantity of key fields in the network log information of the mobile terminal 101. $B_i$ represents a term frequency vector of the mobile terminal 104, and i represents a quantity of key fields in the mobile terminal 104. A calculation result closer to 1 indicates that an included angle between the two term frequency vectors is closer to 0 degrees. In other words, the two term frequency vectors are more similar. Whether the network log information of the mobile terminal 101 is similar to the network log information of the mobile terminal 104 is determined based on a result calculated according to a cosine similarity formula.

For example, if a similarity comparison result is greater than 0.8, the router 105 pushes, to the mobile terminal 101, information for inviting to share management permission on the smart device 102. After the mobile terminal 101 confirms the invitation, the router 105 pushes, to the mobile terminal 104, the information for inviting to share the management permission on the smart device 102. If the mobile terminal 104 confirms to accept the invitation, the router 105 shares the management permission on the smart device 102 with the mobile terminal 104. To be specific, the router 105 may send an address of the smart device 102 to the mobile terminal 104. The sharing of the management permission is to share information such as identification information of the smart device received by the mobile terminal. The identification information includes the address, a serial number, and the like of the smart device. The shared information may further include level information of management permission of the mobile terminal.

For example, the router 105 may further determine, based on the network log information of the mobile terminal 104, whether a network use behavior of the mobile terminal 104 complies with a specific mathematical model or a specific rule. The router 105 may perform mathematical modeling based on network log information of a mobile terminal connected to the communication network 103. The router 105 captures information about a connection time period in the network log information, and cleans the information. For example, network log information of a mobile terminal with a smaller quantity of connection times is deleted. Remaining information is collected. Different time periods are classified into, for example, working hours (8:00 to 12:00), a lunch break (12:00 to 2:00), an activity time period (2:00 to 18:00), a dinner time period (18:00-20:00), and a sleeping time period (20:00 to 8:00). Statistics is performed on classification results to determine an amount of information in different classifications. A K-means algorithm is selected to cluster user behavior. Results of a clustering model are summarized. For example, a user connecting to the communication network 103 for a plurality of times within the activity time period serves as a friend model. If the mobile terminal 104 is connected to the communication network 103 for a plurality of times within the activity time period, the router 105 considers that connection behavior of the mobile terminal 104 conforms to a friend model, and pushes, to the mobile terminal 101, the information for inviting to share the management permission on the smart device 102. After the mobile terminal 101 confirms the invitation, the router 105 pushes, to the mobile terminal 104, the information for inviting to share the management permission on the smart device 102. If the mobile terminal 104 confirms to accept the invitation, the router 105 shares the management permission on the smart device 102 with the mobile terminal 104. To be specific, the router 105 may send the address of the smart device 102 to the mobile terminal 104. The sharing of the management permission is to share the information such as the identification information of the smart device received by the mobile terminal. The identification information includes the address, the serial number, and the like of the smart device. The shared information may further include level information of management permission of a mobile terminal. It may be understood that the specific mathematical model may be a specific rule.

In some other embodiments, the router 105 may further screen and filter information generated when a mobile terminal and a smart device are connected to the router 105. If a mobile terminal is connected to the router 105 abnormally for a plurality of times, for example, attempts to be connected to the router 105 for a plurality of times within a short time period, or does not normally use a data service after being connected to the router 105, or sends a spam packet or phishing information to the router 105, the router 105 may add the mobile terminal abnormally connected to the router 105 to a blacklist, so as not to receive information sent by the mobile terminal. Network security software may be further installed on the router 105, to play a protection function and a discrimination function for a network attack.

In some other embodiments, in the communication system 100, the mobile terminal 101, the mobile terminal 104, and the smart device 102 are connected to the router 105 through the communication network 103. The router 105 forwards, to the mobile terminal 101, connection information generated when the mobile terminal 101 and the mobile terminal 104 are connected to the router 105. The mobile terminal 101 may control the smart device 102 through the communication network 103. The mobile terminal 101 may collect the connection information, and the mobile terminal 101 generates prompt information based on the connection information. The prompt information is used to prompt the user whether to share the control permission on the smart device 102 with the mobile terminal 104. It may be understood that the mobile terminal 101 may determine whether a similarity between the connection information of the mobile terminal 101 and the connection information of the mobile terminal 104 reaches a specific threshold. If the similarity between the connection information generated when the mobile terminal 101 is connected to the router 105 and the connection information generated when the mobile terminal 104 is connected to the router 105 reaches the specific threshold, the mobile terminal 101 generates the prompt information. The mobile terminal 101 may alternatively determine whether the connection information of the mobile terminal 104 conforms to a specific rule. If the connection information of the mobile terminal 104 conforms to the specific rule, the mobile terminal 101 generates the prompt information. Alternatively, there may be another association between the connection information of the mobile terminal 101 and the connection information of the mobile terminal 104. If the association is met, the mobile terminal 101 generates the prompt information. The router 105 may further forward, to the mobile terminal 104, the connection information generated when the mobile terminal 101 and the mobile terminal 104 are connected to the router 105. The mobile terminal 101 may control the smart device 102 through the communication network 103. The mobile terminal 104 may collect the connection information, and generate prompt information based on the connection information. The prompt information is used to prompt the user whether to accept the control permission on the smart device 102.

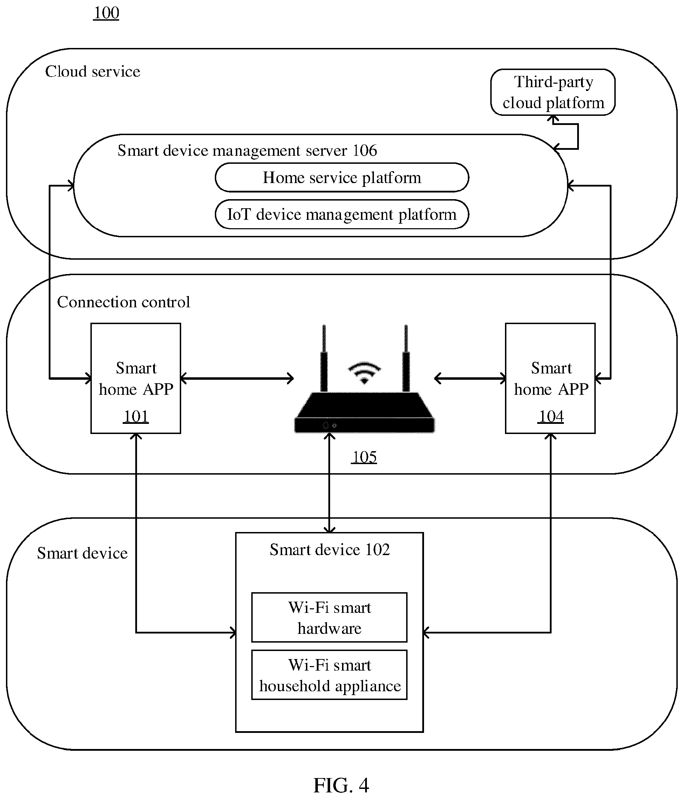

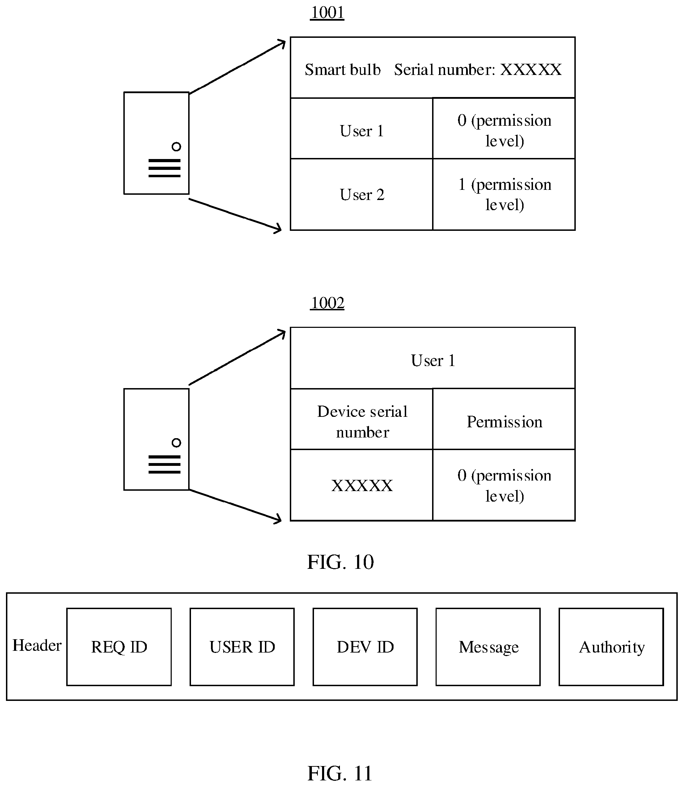

In some other embodiments, the communication system 100 may further include a smart device management server 106 (smart device management server, SDMS). For example, as shown in FIG. 4, the server 106 remotely manages the smart device 102 by using an APP installed on a mobile terminal. For example, a smart home APP installed on the mobile terminal 101 may send information to the server 106 through the communication network 103 based on an input of the user on a touchscreen. The information is used to request the server 106 to perform control (for example, power-on, power-off, or sleep) on the smart device 102. The server 106 may include a home service platform and an IoT device management platform. After successfully authenticating the mobile terminal 101, the home service platform may send, based on the request information, a remote control instruction (for example, power-on, power-off, or sleep) to the smart device 102 by using the IoT device management platform. In the foregoing case, remote control can be performed on the smart device 102 by using the server 106 only after the mobile terminal 101 is successfully authenticated by the server 106. In this way, security of data exchange between the mobile terminal and the smart device is improved. In some other embodiments, the mobile terminal 101 may communicate with the smart device 102 by using the server 106 without authentication. In some other embodiments, the smart device management server 106 may further include a database. For example, as shown in FIG. 10, the smart device management server 106 may store network log information of the mobile terminal 101 and the mobile terminal 104, or may store related information of a smart device, for example, an identifier of the smart device. In some embodiments, the smart device management server 106 includes but is not limited to a server using an operating system, for example, Windows® or Linux®. The smart device management server 106 uses a network as a medium, may provide an internal service through a local area network, and may also provide an external service through a wide area network. The smart device management server 106 may store related information of the smart terminal 101 and the mobile terminal 104, may also forward a message of communication between the mobile terminal 101, the mobile terminal 104, and the smart device 102, and may further process the related information and the communication message and push processed information to the smart terminal 101 and the mobile terminal 104. The smart device management server 106 may be installed with a database including but not limited to MySQL®, Microsoft SQL Server®, or Oracle®. The mobile terminal 101 may send and store data to the smart device management server 106 through the communication network 103. The mobile terminal 104 may send and store data to the smart device management server 106 through the communication network 103. The smart device 102 may also send and store data to the smart device management server 106 through the communication network 103. In some other embodiments, the user of the mobile terminal 101 may alternatively access the server 106 in another manner, to remotely control the smart device 102. For example, the user enters an IP address of the server 106 in a browser of a desktop computer for access. The smart device management server 106 may forward messages sent by different devices to the smart device management server 106 to other devices that are interconnected through the network 103. These devices may be smart devices or mobile terminals. The communication system 100 further includes the router 105. The router 105 may communicate with the smart device management server 106 through the communication network 103. For example, the mobile terminal 101 sends information to the smart device management server 106 through the communication network 103. The mobile terminal 101 may first send the information to the router 105, and the router 105 sends the information to the smart device management server 106 through the communication network 103. The smart home system 100 shown in FIG. 4 is divided into three parts: a cloud service part, a connection control part, and a smart device part. The cloud service part is the smart home management server 106. The home service platform and the IoT device management platform may run on the smart home management server 106. It may be understood that the smart home management server 106 may be further connected to a third-party cloud platform (for example, a WeChat official account or Alibaba Cloud). The connection control part includes the mobile terminal 101 and the mobile terminal 104. Smart home APPs are separately installed on the mobile terminal 101 and the mobile terminal 104. The connection control part further includes the router 105. The mobile terminal 101 and the mobile terminal 104 each may establish a connection to the router 105 through a wireless communication network, and may also establish a connection to the smart home management server 106 through a cellular network. The smart device part includes the smart device 102, and the smart device 102 may further include Wi-Fi smart hardware and a Wi-Fi smart household appliance. Both the Wi-Fi smart hardware and the Wi-Fi smart household appliance use a Wi-Fi protocol to establish connections to the router 105. In addition, the mobile terminal 101 and the mobile terminal 105 may control the smart device 102 through a cellular network by using the smart home APPs, or may control the smart device 102 through a Wi-Fi network of the router 105. It may be understood that the smart hardware and the smart household appliance on the smart device 102 may alternatively use another short-range wireless communication protocol, including but not limited to Bluetooth, ZigBee, or the like. It may be understood that a wireless communication network between the mobile terminal 101, the mobile terminal 104, the smart device 102, and the router 105 includes but is not limited to a short-range wireless communication network, for example, a Bluetooth network or a ZigBee network.

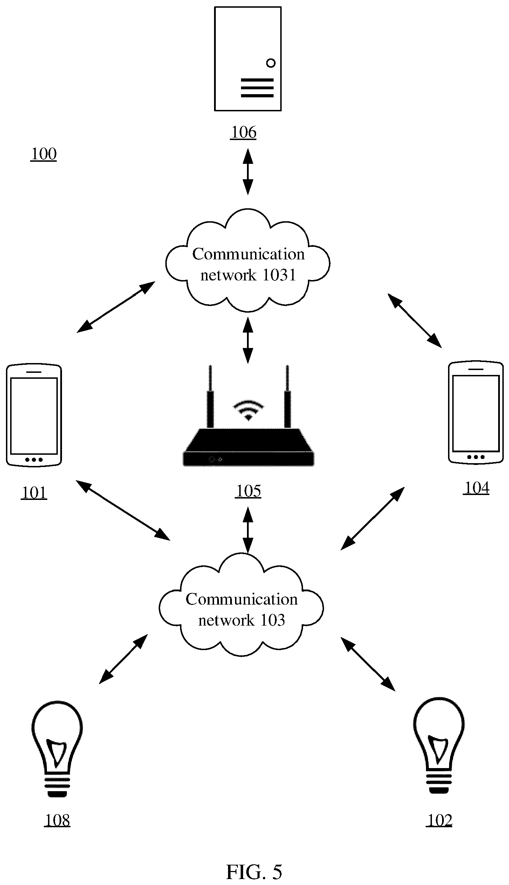

In some embodiments, the communication system 100 may further include a smart device 108. For example, as shown in FIG. 5, the router 105 may provide a data routing and/or transferring function, and send data to another device, another server, or the like through the communication network 103. The routing function can determine a routing path of a data packet from a source end to a destination end. The transferring function can transfer data from an input end of the router to an output end of an appropriate router. The router 105 may further serve as a server in a wireless local area network, store and process information between the mobile terminal and the smart device, and may further send processed information to the smart device management server 106. In some embodiments, the mobile terminal 101, the mobile terminal 104, and the smart device 102 may be connected to a same local area network. The mobile terminal 101 may send information to the router 105 through the communication network 103, and the router 105 may forward the information to the smart device 102. Similarly, the mobile terminal 104 may also send information to the router 105 through the communication network 103, and the router 105 may forward the information to the smart device 102. After the mobile terminal 101 establishes a local area network connection to the router 105, if the mobile terminal 101 needs to send information to the smart device management server 106, the mobile terminal 101 may send the information to the router 105, and the router 105 forwards the information to the smart device management server 106. The router 105 may collect data reported by the smart device 102, and forward the data to the smart device management server 106. When the mobile terminal 101 or the mobile terminal 104 and the router 105 are not in a same local area network, the mobile terminal 101 or the mobile terminal 104 may send information to the smart device management server 106 through the communication network 103 by using cellular data, and the smart device management server 106 may forward the information to the smart device 102. If the mobile terminal 101 can manage the smart device 102, the mobile terminal 104 can manage the smart device 108.

In some embodiments, the communication system 100 may include a plurality of smart devices, for example, the smart bulb 108. For example, as shown in FIG. 5, the smart bulb 108 has a wireless communication module, and may be connected to the router 105 through the communication network 103. In addition, the smart bulb 108 may send data to the router 105 through the network 103. The router 105 may forward, to the smart device management server 106, the data sent by the smart bulb 108. The smart device management server 106 may forward the data to the mobile terminal 101 or the mobile terminal 104. When the smart bulb 108 is used for the first time, the mobile terminal 101 or the mobile terminal 104 needs to register a hardware identifier of the smart bulb 108 with the smart device management server 106. It may be understood that, in some embodiments, the router 105 may serve as a server. The smart bulb 108 and the smart device 102 may be connected to a same communication network 103, and the communication network 103 may be a wireless local area network. In the foregoing communication system, the smart device 102 may be a smart bulb, or may be another smart device having a wireless communication module, including but not limited to a smart lock, a smart air conditioner, a smart socket, a smart video camera, a smart scanner, a smart printer, a smart camera, and the like. In the foregoing communication system, there may be a plurality of smart devices, including but not limited to the smart device 102 and the smart bulb 108. The smart device in the foregoing communication system may send status information of the smart device to the router 105, and may further send a heartbeat packet to the smart device management server 106 to maintain a persistent connection between the smart device and the smart device management server 106. The smart device in the foregoing communication system may receive a control instruction, and complete a corresponding operation according to the control instruction, for example, adjusting brightness and a color of a smart bulb, adjusting a temperature of a smart air conditioner, unlocking or locking a smart lock, turning on or turning off a smart socket, turning on or turning off a smart projector, turning on or turning off a smart camera, turning on or turning off a smart printer, and turning on or turning off a smart scanner.

In some embodiments, the communication system 100 includes the communication network 103. For example, as shown in FIG. 5, the communication network 103 between the mobile terminal 101, the mobile terminal 104, and the router 105 may be a wireless local area network, and may use a Wi-Fi protocol, a CoAP protocol, or another wireless local area network protocol. The network 103 between the smart bulb 108, the smart device 102, and the router 105 may be a wireless local area network, and may use a Wi-Fi protocol, a CoAP protocol, or another wireless local area network protocol. Wi-Fi is one of the IEEE 802.11 protocols. IEEE 802.11 is a wireless network communication standard defined by the Institute of Electrical and Electronics Engineers (institute of electrical and electronics engineer, IEEE). CoAP is a binary-based protocol, and is a special Web protocol used in an unreliable device or network. These devices are generally microcontrollers of a read-only memory (read only memory, ROM) or a random access memory (random access memory, RAM). This protocol is mainly used for a point-to-point application, for example, a low-power device or a smart device, in addition, supports multicast, uses a request/response interconnection mode between devices, and in addition, provides four request types: GET, POST, PUT, and DELETE. The network 103 between the mobile terminal 101, the mobile terminal 104, the smart device management server 106, and the database server 105 may be a wide area network, and may use a TCP protocol, an IP protocol, or an MQTT protocol. TCP is a connection-oriented, reliable, and byte stream-based transport layer communication protocol. The IP protocol is a protocol used to transfer data based on addresses of source and destination hosts. MQTT is a lightweight publish/subscribe (publish/subscribe) communication protocol. The biggest advantage of MQTT is that MQTT can provide a real-time and reliable message service for a connected remote device with little code and limited bandwidth. As an instant messaging protocol with low overheads and low bandwidth usage, MQTT is widely used in the Internet of Things, a small-scale device, a mobile application, and the like. It may be understood that the communication system 100 further includes a communication network 1301. The communication network 1301 may include but is not limited to a cellular network, a wide area network, a local area network, and the like.

In some embodiments, the management permission of the mobile terminal may be classified into different levels. For example, level-0 management permission may be administrator permission, and the mobile terminal may perform all operations on the smart device, including but not limited to control, transfer, deletion, borrowing, recycling, and blacklisting/whitelisting. Level-1 management permission may be first-class permission, and the mobile terminal may perform operations on the smart device that are not related to security and privacy issues such as transfer, deletion, and blacklisting/whitelisting. Level-2 management permission may be second-class permission, and the mobile terminal may perform operations on the smart device, such as startup, power-off, sleep, and adjustment. Level-3 management permission may be third-class permission, and the mobile terminal can perform only an adjustment operation on the smart device, and cannot perform another type of operation. The mobile terminal may transfer the management permission on the smart device to another mobile terminal. If the mobile terminal 101 has the level-0 management permission on the smart device 102, the mobile terminal 101 may transfer, to the mobile terminal 104 through the communication network 103 based on a different permission level, the management permission that is on the smart device 102 and that is of the mobile terminal 101. For example, the mobile terminal 101 may transfer the level-0 management permission that is on the smart device 102 and that the mobile terminal 101 has to the mobile terminal 104. In this case, the mobile terminal 104 has the level-0 management permission on the smart device 102. The mobile terminal 101 may alternatively transfer the level-1 management permission that is on the smart device 102 and that the mobile terminal 101 has to the mobile terminal 104. In this case, the mobile terminal 104 has the level-1 management permission on the smart device 102. Because the level-1 management permission does not have transfer permission, the mobile terminal 104 cannot transfer again the level-1 management permission that is on the smart device 102 and that the mobile terminal 104 has. The router or the smart device management server manages a message received by the router or the smart device management server. The router or the smart device management server compares a different type of the message received by the router or the smart device management server with a management permission level of the mobile terminal that sends the message. If the type of the message is a message within a range of the management permission level that the mobile terminal has, the router or the smart device management server may forward the message to the smart device. Otherwise, the router or the smart device management server does not forward the message. For example, a message type is deletion. If the mobile terminal that sends the message has the level-1 management permission, the router or the smart device manager does not forward the message to the smart device.

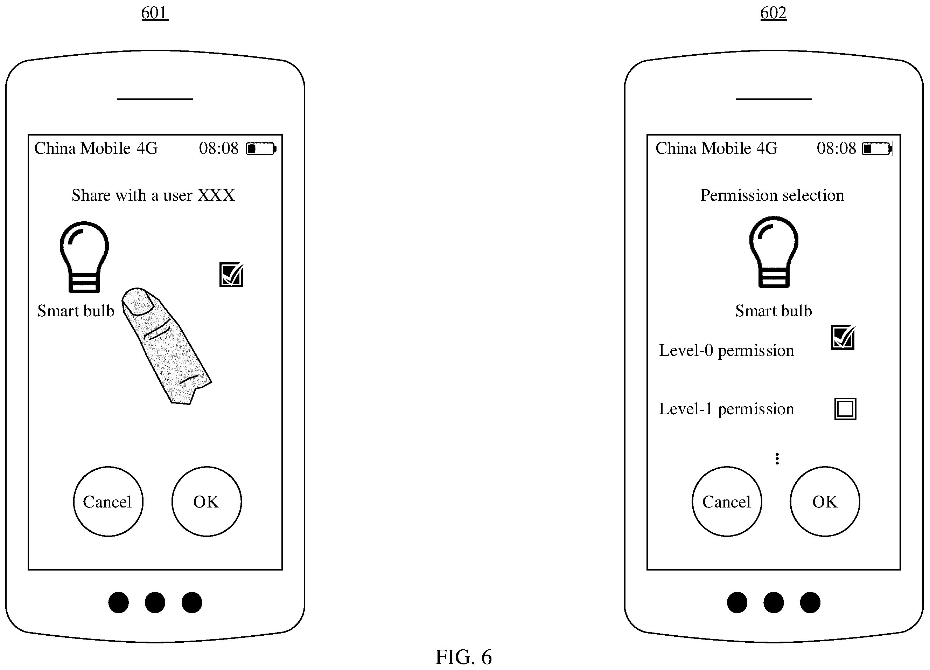

For example, as shown in FIG. 6, after the mobile terminal receives the information for inviting to share the management permission on the smart device, the user may select a management permission level that is on the smart device and that is to be shared with another mobile terminal. After receiving the information for inviting to share the management permission on the smart device, the mobile terminal displays a sharing interface 601 on a display of the mobile terminal. The upper part of the sharing interface 601 is an object with which the management permission on the smart device needs to be shared, for example, "share with a user XXX". The middle part of the sharing interface 601 is an icon, a name, and a check box of the smart device, for example, "smart bulb". The lower part of the sharing interface 601 is a "Cancel" button and an "OK" button. If the user taps the icon or the name of the smart device, for example, the user taps "smart bulb", a permission selection interface 602 is displayed. The permission selection interface 602 includes the icon and the name of the smart device, and permission of different levels that can be selected by the user, for example, "level-0 permission" and "level-1 permission". The user may select management permission on the smart device that needs to be shared, for example, select a check box. A "Cancel" button and an "OK" button are at the lower part of the permission selection interface 602. After selecting, on the permission selection interface 602, the permission that is on the smart device and that the user needs to share, the user taps the "OK" button and returns to the sharing interface 601. After the user taps the "OK" button on the sharing interface 601, the mobile terminal sends, to the router 105, information for confirming the invitation to share the management permission on the smart device. The router 105 shares the management permission on the smart device with the another mobile terminal.

In some embodiments, the mobile terminal 101 and the mobile terminal 104 may belong to a same group, for example, a family, colleague, rental, guest, or hotel group. For example, in the family group, the mobile terminal 101 may have a parental attribute, and the mobile terminal 104 may have a child attribute, or the mobile terminal may have a family administrator attribute, and the mobile terminal 104 may have a family member attribute. For another example, in the colleague group, the mobile terminal 101 may have a supervisor attribute, and the mobile terminal 104 may have a subordinate attribute. For another example, in the rental group, the mobile terminal 101 may have a landlord attribute, and the mobile terminal 104 may have a tenant attribute. For another example, in the guest group, the mobile terminal 101 may have an administrator or host attribute, and the mobile terminal 104 may have a guest attribute. For another example, in the hotel group, the mobile terminal 101 may have a landlord or manager attribute, and the mobile terminal 104 may have a visitor attribute.

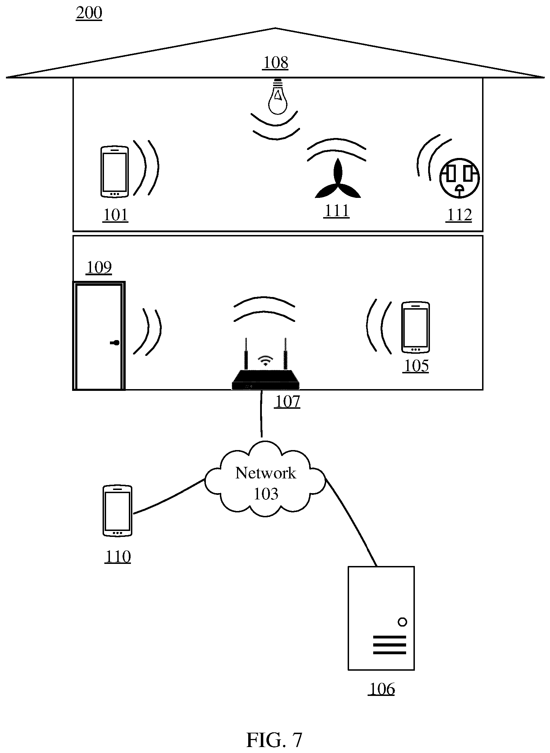

In a family life scenario, for example, as shown in FIG. 7, a smart home system 200 includes a mobile terminal 101, a mobile terminal 104, and a mobile terminal 110, further includes smart devices such as a smart lock 109, a smart bulb 108, a smart air conditioner 111, and a smart socket 112, and further includes a router 105, a smart device management server 106, and a network 103. The mobile terminal 101, the mobile terminal 104, the mobile terminal 110, the smart bulb 108, the smart lock 109, the smart air conditioner 111, and the smart socket 112 are separately connected to the router 105, and are on a same network. The network may be a wireless local area network, and use a protocol that may be a Wi-Fi protocol or a CoAP protocol. The router 105 is connected to the smart device management server 106 through the network 103, and a protocol used by the network 103 may be a TCP protocol, an IP protocol, or a CoAP protocol. The mobile terminal 110 is connected to the smart device management server 106 through the network 103, and a protocol used by the network 103 may be a TCP protocol or an MQTT protocol.

In some embodiments, smart devices that can be controlled by the mobile terminal 101 include the smart bulb 108, the smart air conditioner 111, and the smart socket 112, and a smart device that can be controlled by the mobile terminal 104 includes the smart lock 109. The mobile terminals and the smart devices are all connected to a wireless local area network established by the router 105. The mobile terminals and the smart devices are all registered with the smart device management server 106. It may be understood that, in some embodiments, the router 105 may also serve as a server. The router 105 may communicate with the smart device management server 106. The mobile terminal 110 may access the smart device management server 106 through the network 103, and the network 103 may be a cellular network. That the mobile terminal 110 is outside a house shown in the figure means that the mobile terminal is not connected to the wireless local area network established by the router 105. The router 105 may collect and record a time point and a time period at and within which the mobile terminal 101 and the mobile terminal 104 are connected to the wireless local area network, and may further collect and record quantities of times that the mobile terminals separately send control instructions to different smart devices and quantities of smart devices that different mobile terminals have. The router 105 may compare the time periods within which the different mobile terminals are connected to the wireless local area network, and analyze a matching degree. If the matching degree exceeds a specific threshold (for example, 80%), the mobile terminal 101 and the mobile terminal 104 may be combined into one group. In the smart home system 200, the group may be the family group. The mobile terminal 101 may have the parental attribute, and the mobile terminal 104 may have the child attribute, or the mobile terminal 104 may have the family member attribute. The mobile terminal 104 may have the parental attribute, and the mobile terminal 101 may have the child attribute, or the mobile terminal 101 may have the family member attribute. When mobile terminals having a family group relationship are connected to the wireless local area network established by the router 105, the router 105 may push a message for sharing management permission on a smart device to a mobile terminal. If the mobile terminal 101 has the parental attribute, the mobile terminal 101 may receive the message that is for inviting to share the management permission on the smart device and that is pushed by the router 105. If the mobile terminal 101 has the child attribute, the mobile terminal 101 does not receive the message that is for sharing the use permission on the smart device and that is pushed by the router 105. If the mobile terminal 101 has the family member attribute, the mobile terminal 101 may receive the message that is for inviting to share the management permission on the smart device and that is pushed by the router 105. The message that is for inviting to share the management permission on the smart device and that is pushed by the router 105 includes but is not limited to information such as a name, a quantity, a model, a serial number, use permission, and use duration of the smart device. The smart device whose management permission may be shared in the foregoing message is determined by a quantity of times that the mobile terminal sends a control instruction to the smart device and that are collected and recorded by the router 105. For example, management permission on a smart device that receives a control instruction over a specific quantity of times (for example, 50 times) may be shared by using a push message. If the mobile terminal 101 has the parental attribute, the mobile terminal 104 has the child attribute, the smart bulb 108 receives a control instruction from the mobile terminal 101 60 times, the smart air conditioner 111 receives a control instruction from the mobile terminal 101 40 times, and the smart socket 112 receives a control instruction from the mobile terminal 101 70 times, when the mobile terminal 101 is connected to the wireless local area network established by the router 105, the router 105 pushes a message for inviting to share management permission on the smart bulb 108 and the smart socket 112 with the mobile terminal 104. If the mobile terminal 101 confirms to share the management permission on the devices, a message for confirming the invitation to share the management permission is sent to the router 105, and the router 105 forwards the message to the mobile terminal 104. If the mobile terminal 104 confirms to accept the sharing of the management permission on the smart devices, an acceptance confirmation message is sent to the router 105, and the router 105 forwards the acceptance confirmation message to the smart device management server 106. The smart device management server 106 adds user permission on the smart bulb 108 and the smart socket 112 to the mobile terminal 104, and remarks a permission level. If the mobile terminal 110 has, before accessing the local area network established by the router 105, management permission that is on a smart device and that is shared by the mobile terminal 101 with the mobile terminal 110, and if the mobile terminal 110 is not connected to the wireless local area network for a period of time (for example, four to five days), when the mobile terminal 101 is connected to the local area network, the router 105 pushes a message for canceling the management permission on the smart device to the mobile terminal 101. If the mobile terminal 101 confirms to cancel the management permission on the smart device, a message for confirming to cancel the management permission on the smart device is sent to the router 105, and the router 105 forwards the message to the smart device management server 106. The smart device management server 106 deletes the user permission on the smart bulb 108 and the smart socket 112 from the mobile terminal 110. The smart device management server 106 pushes an operation success message to the mobile terminal in the home group after adding or deleting the user permission each time.

In a scenario in which a visitor uses a room rental APP, for example, as shown in FIG. 7, a smart home system 200 includes a mobile terminal 101, a mobile terminal 104, and a mobile terminal 110, further includes smart devices such as a smart lock 109, a smart bulb 108, a smart air conditioner 111, and a smart socket 112, and further includes a router 105, a smart device management server 106, and a network 103. The mobile terminal 101, the mobile terminal 104, the mobile terminal 110, the smart bulb 108, the smart lock 109, the smart air conditioner 111, and the smart socket 112 are separately connected to the router 105, and are on a same network. The network may be a wireless local area network, and use a protocol that may be a Wi-Fi protocol or a CoAP protocol. The router 105 is connected to the smart device management server 106 through the network 103, and a protocol used by the network 103 may be a TCP protocol, an IP protocol, or a CoAP protocol. The mobile terminal 110 is connected to the smart device management server 106 through the network 103, and a protocol used by the network 103 may be a TCP protocol or an MQTT protocol.

In some embodiments, a user of the mobile terminal 101 may be a landlord, a user of the mobile terminal 110 may also be a landlord, and a user of the mobile terminal 104 is a visitor. When the user of the mobile terminal 101 is a landlord, the landlord and the visitor are in a same house, and both the mobile terminal 101 and the mobile terminal 104 are connected to a wireless local area network established by the router 105. Smart devices that can be controlled by the mobile terminal 101 include the smart bulb 108, the smart air conditioner 111, the smart socket 112, the smart lock 109, and the like. The mobile terminals and the smart devices are all connected to the wireless local area network established by the router 105. The mobile terminals and the smart devices are all registered with the smart device management server 106. The router 105 may communicate with the smart device management server 106. After the visitor reserves a room by using the room reservation APP (for example, Meituan, Airbnb, or Booking), the landlord may send, to the visitor, a connection password of the wireless local area network established by the router 105. When the visitor arrives at the room, the mobile terminal 104 is connected to the wireless local area network established by the router 105, and the router 105 pushes an account registration message to the mobile terminal 104. After the visitor taps, by using the mobile terminal 104, to confirm registration, the mobile terminal 104 sends a registration confirmation message to the router 105, and the router 105 forwards the registration confirmation message to the smart device management server 106. After receiving the registration confirmation message, the smart device management server 106 registers a personal account for the visitor. The personal account includes a device list of smart devices. In addition, when the mobile terminal 104 is connected to the wireless local area network established by the router 105, the router 105 pushes, to the mobile terminal 101 of the landlord, a message for inviting to share management permission on a smart device. The landlord may confirm, by using the mobile terminal 101, to share, with the mobile terminal 104 of the visitor, management permission on the smart device that can be controlled by the landlord, for example, the smart bulb 108, the smart air conditioner 111, the smart socket 112, or the smart lock 109. The landlord sends, to the router 105 by using the mobile terminal 101, information for sharing the management permission on the smart device, and the router 105 forwards the information to the mobile terminal 104 of the visitor. The visitor confirms, by using the mobile terminal 104, to receive the management permission on the smart device, and sends a confirmation message to the router 105. The router 105 forwards the confirmation message to the smart device management server 106. The smart device management server 106 adds a serial number of the shared smart device to the device list of the visitor. In some other embodiments, the mobile terminal 110 may access the smart device management server 106 through the network 103, and the network 103 may be a cellular network. The mobile terminal 110 may be a landlord. To be specific, the landlord is not in a room at this time. After the visitor reserves the room by using the room reservation APP (for example, Meituan, Airbnb, or Booking), the landlord may send, to the visitor, a connection password of a wireless local area network established by the router 105. When the visitor arrives at the room, the mobile terminal 104 is connected to the wireless local area network established by the router 105, and the router 105 pushes an account registration message to the mobile terminal 104. After the visitor taps, by using the mobile terminal 104, to confirm registration, the mobile terminal 104 sends a registration confirmation message to the router 105, and the router 105 forwards the registration confirmation message to the smart device management server 106. After receiving the registration confirmation message, the smart device management server 106 registers a personal account for the visitor. The personal account includes a device list of smart devices. In addition, when the mobile terminal 104 is connected to the wireless local area network established by the router 105, the router 105 pushes, to the smart device management server 106, a message for inviting to share management permission on a smart device. The smart device management server 106 forwards the message to the mobile terminal 110 of the landlord through the network 103. After receiving the message for inviting to share the management permission on the smart device, the landlord may confirm, by using the mobile terminal 110, to share, with the mobile terminal 104 of the visitor, management permission on the smart device that can be controlled by the landlord, for example, the smart bulb 108, the smart air conditioner 111, the smart socket 112, or the smart lock 109. The landlord sends, to the smart device management server 106 through the network 103 by using the mobile terminal 110, a message for confirming to share the management permission on the smart device. The smart device management server 106 forwards the message to the router 105, and the router 105 pushes the message to the mobile terminal 104 of the visitor. The visitor confirms, by using the mobile terminal 104, to receive the management permission on the smart device, and sends a confirmation message to the router 105. The router 105 forwards the confirmation message to the smart device management server 106. The smart device management server 106 adds, to the device list of the visitor, a serial number of the smart device whose management permission is shared. In the smart home system 200, the group may be a hotel group. The mobile terminal 101 may have a landlord or manager attribute, and the mobile terminal 104 may have a visitor attribute. The mobile terminal 104 may have a landlord or manager attribute, the mobile terminal 101 may have a visitor attribute, and the mobile terminal 110 may have a landlord or manager attribute. When mobile terminals having a hotel group relationship are connected to the wireless local area network established by the router 105, the router 105 may push a message for sharing use permission on a smart device to a mobile terminal of the landlord or a manager, and may push an account registration message to a mobile terminal of the visitor. If the mobile terminal 101 has the landlord or manager attribute, the mobile terminal 101 may receive the message that is for sharing the management permission on the smart device and that is pushed by the router 105. If the mobile terminal 101 has the visitor attribute, the mobile terminal 101 receives the account registration message pushed by the router 105. The message that is for sharing the management permission on the smart device and that is pushed by the router 105 includes but is not limited to information such as a name, a quantity, a model, a serial number, use permission, and use duration of the smart device. The smart device management server 106 pushes an operation success message to the mobile terminal in the home group after adding or deleting user permission each time.

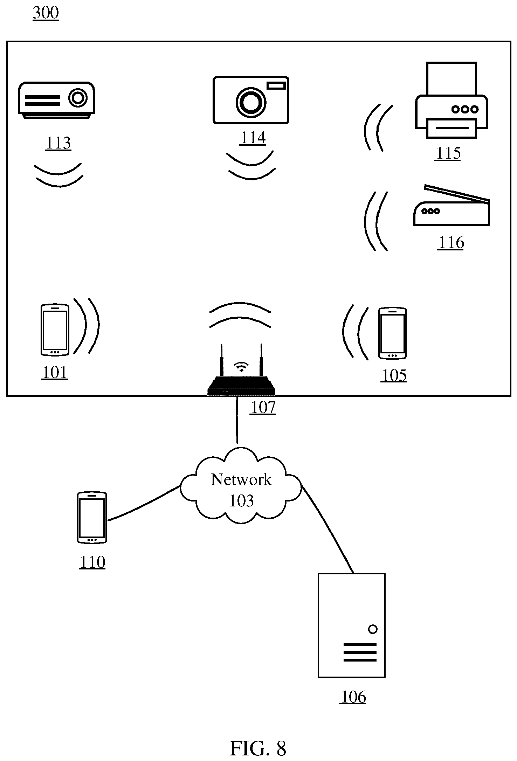

In an office scenario, for example, as shown in FIG. 8, a smart office system 300 includes a mobile terminal 101, a mobile terminal 104, and a mobile terminal 110, further includes smart devices such as a smart projector 113, a smart camera 114, a smart printer 115, and a smart scanner 116, and further includes a router 105, a database server 106, and a network 103. The mobile terminal 101, the mobile terminal 104, the mobile terminal 110, the smart projector 113, the smart camera 114, the smart printer 115, and the smart scanner 116 are separately connected to the router 105, and are on a same network. The network may be a wireless local area network, and use a protocol that may be a Wi-Fi protocol or a CoAP protocol. The router 105 is connected to the smart device management server 106 through the network 103, and a protocol used by the network 103 may be a TCP protocol, an IP protocol, or a CoAP protocol. The mobile terminal 110 is connected to the smart device management server 106 through the network 103, and a protocol used by the network 103 may be a TCP protocol or an MQTT protocol.

In some embodiments, smart devices that can be controlled by the mobile terminal 101 include the smart projector 113, the smart camera 114, and the smart printer 115, and a smart device that can be controlled by the mobile terminal 104 includes the smart scanner 116. The mobile terminals and the smart devices are all connected to a wireless local area network established by the router 105. The mobile terminals and the smart devices are all registered with the database server 106. The router 105 may communicate with the database server 106. The mobile terminal 110 may access the database server 106 through the network 103, and the network 103 may be a cellular network. That the mobile terminal 110 is outside a house shown in the figure means that the mobile terminal is not connected to the wireless local area network established by the router 105. The router 105 may collect and record a time period within which the mobile terminal 101 and the mobile terminal 104 are connected to the wireless local area network, and may further collect and record quantities of times that the mobile terminals separately send control instructions to different smart devices. The router 105 may compare the time periods within which the different mobile terminals are connected to the wireless local area network, and analyze a matching degree. If the matching degree exceeds a specific threshold (for example, 80%), the mobile terminal 101 and the mobile terminal 104 may be combined into one group. In the smart office system 300, the group may be a working group. The mobile terminal 101 may have a supervisor attribute, and the mobile terminal 104 may have a subordinate attribute, or the mobile terminal 104 may have a colleague attribute. The mobile terminal 104 may have a supervisor attribute, and the mobile terminal 101 may have a subordinate attribute, or the mobile terminal 101 may have a colleague attribute. When mobile terminals having a working group relationship are connected to the wireless local area network established by the router 105, the router 105 may push a message for sharing management permission on a smart device to a mobile terminal. If the mobile terminal 101 has the supervisor attribute, the mobile terminal 101 may receive the message that is for inviting to share the management permission on the smart device and that is pushed by the router 105. If the mobile terminal 101 has the subordinate attribute, the mobile terminal 101 does not receive the message that is for inviting to share the management permission on the smart device and that is pushed by the router 105. If the mobile terminal 101 has the colleague attribute, the mobile terminal 101 may receive the message that is for sharing the management permission on the smart device and that is pushed by the router 105. The message that is for sharing the management permission on the smart device and that is pushed by the router 105 includes but is not limited to information such as a name, a quantity, a model, a serial number, use permission, and use duration of the smart device. The smart device whose management permission may be shared in the foregoing message is determined by a quantity of times that the mobile terminal sends a control instruction to the smart device and that are collected and recorded by the router 105. For example, use permission on a smart device that receives a control instruction over a specific quantity of times (for example, 50 times) may be shared by using a push message. If the mobile terminal 101 has the supervisor attribute, the mobile terminal 104 has the subordinate attribute, the smart projector 113 receives a control instruction from the mobile terminal 101 60 times, the smart camera 114 receives a control instruction from the mobile terminal 101 40 times, and the smart printer 115 receives a control instruction from the mobile terminal 101 70 times, when the mobile terminal 101 is connected to the wireless local area network established by the router 105, the router 105 pushes a message for sharing management permission on the smart projector 113 and the smart printer 115 with the mobile terminal 104. If the mobile terminal 101 confirms to share the management permission on the devices, a confirmation message is sent to the router 105, and the router 105 forwards the confirmation message to the mobile terminal 104. If the mobile terminal 104 confirms to accept the shared management permission on the smart devices, an acceptance confirmation message is sent to the router 105, and the router 105 forwards the acceptance confirmation message to the database server 105. The database server 105 adds user permission on the smart projector 113 and the smart printer 115 to the mobile terminal 104. If the mobile terminal 110 has, when accessing the wireless local area network established by the router 105, use permission that is on a smart device and that is shared by the mobile terminal 101 with the mobile terminal 110, and if the mobile terminal 110 is not connected to the wireless local area network for a period of time (for example, four to five days), when the mobile terminal 101 is connected to the wireless local area network, the router 105 pushes a message for canceling the sharing of the management permission on the smart device with the mobile terminal 104 to the mobile terminal 101. If the mobile terminal 101 confirms to cancel the sharing of the management permission on the smart device, a cancellation confirmation message is sent to the router 105, and the router 105 forwards the cancellation confirmation message to the database server 106. The database server 106 deletes the user permission on the smart projector 113 and the smart printer 115 from the mobile terminal 110. The database server 106 pushes an operation success message to the mobile terminal in the working group after adding or deleting the user permission each time.

Similarly, the rental group and the guest group are similar to the family group. Details are not described herein.

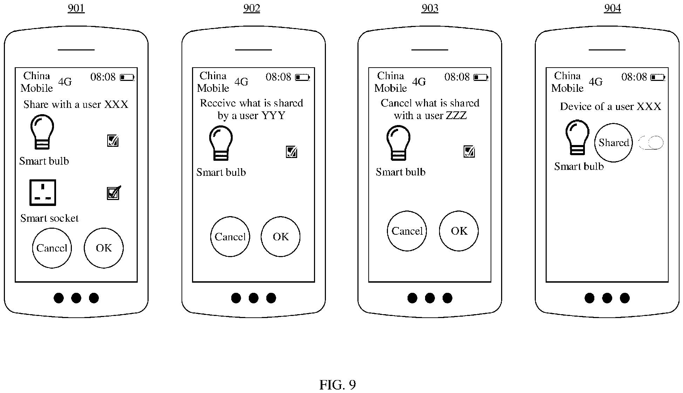

In some embodiments, after being connected to the wireless local area network established by the router 105, the mobile terminal 101 receives the message that is for sharing the management permission on the smart device and that is pushed by the router 105. For example, as shown in FIG. 9, an interface 901 is an interface presented on a touchscreen by the mobile terminal 101 after the mobile terminal 101 receives the message that is for sharing the management permission on the smart device and that is pushed by the router 105. The interface 901 includes a serial number of a target mobile terminal with which sharing is to be performed, for example, "to a user XXX", and further includes a name of a to-be-shared smart device, for example, a "smart bulb", a "smart socket", or a "smart lock", selection buttons for confirmation and cancellation, for example, a "Cancel" button and a "share" button, and a selection box, for example, a box with a tick, where a solid tick indicates being selected, and a hollow tick indicates being unselected. The mobile terminal 101 may receive a touch operation of a user. For example, the user taps a selection box of any smart device, and taps the "share" button. The mobile terminal 101 may receive the touch operation of tapping the "share" button by the user, and send related information of the selected smart device to the router 105. The router 105 forwards the related information to a target mobile terminal 104 with which sharing is to be performed. An interface 902 is an interface presented on a touchscreen by the mobile terminal 104 after the mobile terminal 104 receives the sharing message. The interface 902 includes a name of a source mobile terminal that sends the sharing information, for example, "receive what is shared by a user YYY", and further includes the name of the to-be-shared smart device, for example, the "smart bulb" or the "smart socket", selection buttons for confirmation and cancellation, for example, a "Cancel" button and an "OK" button, and a selection box, for example, a box with a tick, where a solid tick indicates being selected, and a hollow tick indicates being unselected. The mobile terminal 104 may receive a touch operation of a user. The user taps a selection box of any smart device, and taps the "OK" button. The mobile terminal 104 receives the touch operation, and sends a sharing confirmation message to the router 105. The router 105 forwards the sharing confirmation message to the smart device management server 106 or the database server 106. After receiving the sharing confirmation message, the smart device management server 106 or the database server 106 adds a serial number of the smart device shared by the mobile terminal 101 to a device list of the user of the mobile terminal 104. The smart device management server 106 or the database server 106 pushes an operation success message to a mobile terminal in a group after adding or deleting user permission each time. The mobile terminal 104 obtains the device list from the smart device management server 106 or the database server 106 through the network 103, and displays, on the touchscreen of the mobile terminal 104, a smart device that can be controlled by the mobile terminal 104. As shown on an interface 904, the interface 904 includes a name of the user of the mobile terminal 104, for example, "a smart device of a user YYY", and further includes a list of a smart device, for example, an icon and a name of the smart bulb or the smart socket may be displayed on the interface 904, a mark of the shared smart device, for example, a mark of a text "shared", and a switch that can be used to operate a smart device, for example, the switch and the smart device are in a same row. The mobile terminal 104 receives an operation of tapping the switch by the user, and sends a control instruction to the router 105 through the wireless local area network. The router 105 forwards the control instruction to a target smart device. Finally, the target smart device performs a corresponding operation. Alternatively, the mobile terminal 104 receives an operation of tapping the switch by the user, and sends a control instruction to the smart device management server 106 or the database server 106 through the cellular network. The smart device management server 106 or the database server 106 forwards the control instruction to a target smart device. Finally, the target smart device performs a corresponding operation.

In some other embodiments, after the mobile terminal 110 is not connected to the wireless local area network established by the router 105 for a period of time (for example, four to five days), after being connected to the wireless local area network, the mobile terminal 101 receives a message that is for canceling the sharing of the smart device and that is pushed by the router 105. As shown on an interface 903 in FIG. 9, the mobile terminal 101 displays a name of a user from which sharing is canceled, for example, "cancel what is shared with a user ZZZ", and further displays a smart device whose sharing is canceled, for example, the smart air conditioner, selection buttons for confirmation and cancellation, for example, a "Cancel" button and an "OK" button, and a selection box, for example, a box with a tick, where a solid tick indicates being selected, and a hollow tick indicates being unselected. The mobile terminal 101 may receive a touch operation of the user. For example, the user taps a selection box of any smart device, and taps the "OK" button. The mobile terminal 101 receives the touch operation of tapping the "OK" button by the user, and sends a sharing cancellation confirmation message to the router 105. The router 105 forwards the sharing cancellation confirmation message to the smart device management server 106. After receiving the sharing cancellation confirmation message, the smart device management server 106 deletes, from a device list of the user of the mobile terminal 110, a serial number of the smart device whose sharing is canceled. When the mobile terminal 110 requests the device list from the smart device management server 106 again, the smart device whose sharing is canceled does not appear on a display interface on a touchscreen of the mobile terminal 110. The smart device management server 106 pushes an operation success message to the mobile terminal in the group after adding or deleting the user permission each time.

In some embodiments, a device list of a user of a mobile terminal in the smart device management server 106 or the database server 106 is shown in FIG. 10. The device list of the user may be shown in Table 1001. A header of the table is a name and a serial number of a smart device, for example, "smart bulb, serial number XXXX". There are two columns under this item of the table. One column is a user name, and the other column is a permission level. Use permission of a user is represented by a number. A number 0 indicates administrator permission, a number 1 indicates first-class permission, and so on. The device list of the user may be alternatively shown in Table 1002. A header of the table is a user name, for example, "user 1". There are two columns under this item of the table. One column is a device serial name, and the other column is a permission level. Use permission of the user is represented by a number. A number 0 indicates administrator permission, a number 1 indicates first-class permission, and so on. After receiving the sharing confirmation message, the smart device management server 106 adds a number of a user with which the smart device is shared for use to Table 1001, or adds a serial number of the to-be-shared smart device to Table 1002.

In some embodiments, a network protocol used by a wireless local area network established by a router may be CoAP. A mobile terminal and a smart device serve as clients (Client), and the router serves as a server (Server). The mobile terminal may push an instruction for operating the smart device to the wireless router in a POST manner, and the router, serving as the server (Server), pushes the message to the smart device in the POST manner. After receiving the operation instruction, the smart device performs a corresponding operation in response to the operation instruction. The smart device may push a status of the smart device to the router in the POST manner, and then the router forwards the information to a server 120.

In some other embodiments, a network 103 used between the router and a smart device management server or a database server may be CoAP. The router serves as a client, and the smart device management server or the database server serves as a server. The router may push, to the smart device management server or the database server in the POST manner, the received status information that is of the smart device and that is sent by the smart device. After receiving the status information that is of the smart device and that is sent by the router, the smart device management server or the database server forwards the information to the mobile terminal. After receiving the information forwarded by the smart device management server or the database server, the mobile terminal displays the status information of the smart device on an application interface of the mobile terminal.

In some embodiments, a network 103 used between the smart device, the mobile terminal, and the smart device management server or the database server may be MQTT. The smart device management server or the database server is a broker (Broker), and is responsible for forwarding a message. The mobile terminal and the smart device each may serve as a publisher (Publish) or a subscriber (Subscribe). When the smart device is a publisher, the mobile terminal is a subscriber. When the status information of the smart device changes, the mobile terminal may receive related information. When the mobile terminal is a publisher, the smart device is a subscriber. The mobile terminal publishes a command for operating the smart device, and the smart device that subscribes to the related mobile terminal receives the command, and performs a corresponding operation according to the command.

In some embodiments, the mobile terminal 101, the mobile terminal 104, and the mobile terminal 110 may send, by using applications running on the mobile terminal 101, the mobile terminal 104, and the mobile terminal 110, commands for controlling a smart device. The mobile terminal 101, the mobile terminal 104, and the mobile terminal 110 may further send heartbeat packets to keep TCP connections to the smart device management server 106 or the database server 106 uninterrupted. The mobile terminal 101, the mobile terminal 104, and the mobile terminal 110 may further actively obtain device lists from the smart device management server 106 or the database server 106.

In some other embodiments, the router 105 serves as a message center, and may obtain a message sent by a mobile terminal to the router and a message sent by a smart device to the wireless router. The router intercepts a header part in the message. For example, as shown in FIG. 11, the header part includes but is not limited to parts such as a request message serial number, a user serial number, a device serial number, message content, and a permission level. A field carried in the request message serial number is "requestId". A field carried in the user serial number is "userId". A field carried in the device serial number is "devId". A field carried in the message content is "cmd+data", where "cmd" indicates a type of the message, and "data" indicates specific content of data related to the smart device. A field carried in the permission level is "n", where n is a positive integer including 0, indicating a level of use permission. For example, a cross-network-element key interface is described as follows.

A control interface from an APP to the router to a device

```
POST /cmd
HEADER_REQ_ID: requestId
HEADER_USER_ID: userId
HEADER_DEV_ID: devId
{
   "Switch": "on"
}
```

A data reporting device interface from the device to the router to a server

```
POST /data
HEADER_REQ_ID: requestId
HEADER_USER_ID: userId
HEADER_DEV_ID: devId
{
   "Switch": "off"
}
```

A key interface for a user's one-click operation

An invitation interface from the router to an owner user 1:

```
POST /invite
HEADER_REQ_ID: requestId
HEADER_USER_ID: user1
HEADER_DEV_ID: devId
{
"user": "to_user2",
"devId" "devId1"
}
```

An invitation interface from the router to a family user 2:

```
POST /accept
HEADER_REQ_ID: requestId
HEADER_USER_ID: user1
HEADER_DEV_ID: devId
{
   "user": "from_user1",
   "devId" "devId1"
}
```

An invitation cancellation interface from the router to the owner user1:

```
POST /cancel
HEADER_REQ_ID: requestId
HEADER_USER_ID: user1
HEADER_DEV_ID: devId
{
   "user": "Xiao Ming",
}
```

The foregoing "userId" is a random ID corresponding to a user account. The router 105 may determine a similarity between different "userIds" by using a time period, duration, and the like of a Wi-Fi connection. If the similarity reaches a specific threshold, the router 105 may send prompt information to prompt the mobile terminal 101 to share control permission on a smart device with the mobile terminal 104. It may be understood that the permission level may be included in the data header part, or may be obtained from the device management server 106. For example, after obtaining the "userId", the router 105 may query the device management server 106 for permission information related to the "userId", and anonymize the information for obtaining (for example, intercept a part).

The router 105 performs association degree matching based on factors such as the header part in the message, a time period and duration within which each user connects to a wireless local area network, and a quantity of smart devices that each user has, and can obtain an association relationship between the users through analysis. For example, if an association degree between two mutually compared users is greater than a specified threshold, the router determines that the two users belong to a same group, and sends an association degree matching result to the smart device management server 106 through the network 103. The router 105 may also push a message for sharing a smart device to the mobile terminal 101 through the wireless local area network, receive a message that is for sharing a smart device and that is sent by the mobile terminal 101, and forward the message for sharing the smart device to the mobile terminal 104. If a user previously belongs to a same group, but does not use or seldom uses the wireless local area network within a period of time (for example, one week), or an association degree between the user and another user is less than a specified threshold (for example, 10%), the router 105 determines that the user is out of the group relationship, and sends a matching result to the smart device management server 106 or the database server 106 through the network 103. The router 105 may also send a message for canceling sharing of a smart device to the mobile terminal 110.

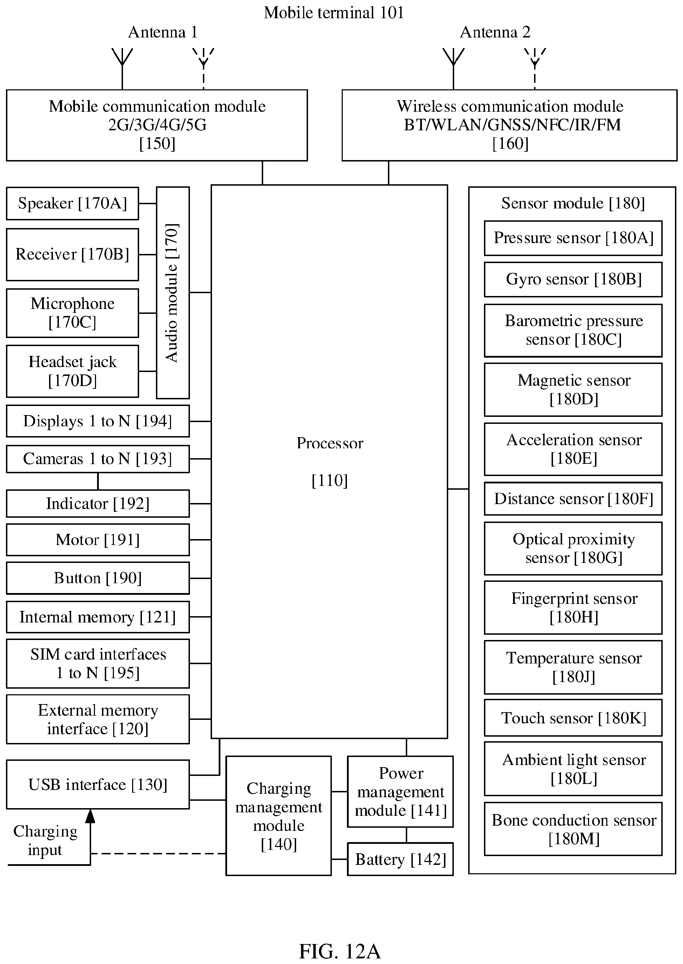

For example, an electronic device 100 is shown in FIG. 12A. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the electronic device 100 may be implemented through the antenna 1, the antenna 2, the mobile communication module 150, the wireless communication module 160, the modem processor, the baseband processor, and the like.

The mobile communication module 150 may provide a solution that includes wireless communication such as 2G, 3G, 4G, and 5G and that is applied to the electronic device 101. The mobile communication module 150 may include one or more filters, a switch, a power amplifier, a low noise amplifier, and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some function modules of the mobile communication module 150 may be disposed in the processor 110. In some embodiments, at least some function modules of the mobile communication module 150 and at least some modules of the processor 110 may be disposed in a same component.

The wireless communication module 160 may provide a solution that includes wireless communication such as a wireless local area network (wireless LAN, WLAN), Bluetooth, a global navigation satellite system (global navigation satellite system, GNSS), frequency modulation (frequency modulation, FM), NFC, and an infrared (infrared, IR) technology and that is applied to the electronic device 101. The wireless communication module 160 may be one or more components integrating one or more communication processor modules. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, the antenna 1 of the electronic device 101 and the mobile communication module 150 are coupled, and the antenna 2 and the wireless communication module 160 are coupled, so that the electronic device 101 can communicate with a network and another electronic device by using a wireless communication technology. The wireless communication technology may include a GSM, a GPRS, CDMA, WCDMA, TD-SCDMA, LTE, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 may implement an audio function, for example, music playing or recording, by using the audio module 170, the speaker 170A, the receiver 170B, the microphone 170C, the headset jack 170D, the application processor, and the like.

The electronic device 100 implements a display function by using the GPU, the display 194, the application processor, and the like. The GPU is a microprocessor for image processing, and is connected to the display 194 and the application processor. The GPU is configured to perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a mini-LED, a micro-LED, a micro-OLED, quantum dot light emitting diodes (quantum dot light emitting diodes, QLED), or the like. In some embodiments, the electronic device 100 may include at least one display 194.

The electronic device 100 may implement a photographing function by using the ISP, the camera 193, the video codec, the GPU, the display 194, the application processor, and the like.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by one or more functions (for example, a sound playing function and an image playing function), and the like. The data storage area may store data (for example, audio data or a phone book) created during use of the electronic device 100, and the like. In addition, the internal memory 121 may include a high-speed random access memory, and may further include a non-volatile memory, for example, one or more magnetic disk storage components, a flash component, or a universal flash storage (universal flash storage, UFS).

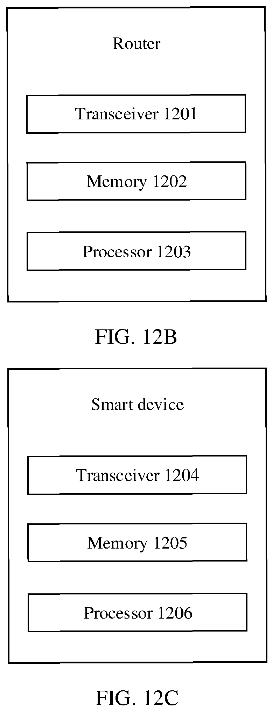

A router is shown in FIG. 12B. The router may include a transceiver 1201, a memory 1202, and a processor 1203. The transceiver 1201 is configured to receive or send a message, and provide an interface for communication between electronic devices. The memory 1202 is configured to store usage information of a mobile terminal. The processor 1203 is configured to compare the stored usage information of the mobile terminal. The router may collect the usage information of the mobile terminal. For example, the router 105 may collect usage information of the mobile terminal 101 and the mobile terminal 104. The usage information includes but is not limited to a time point at which the mobile terminal 101 and the mobile terminal 104 are connected to a local area network, and duration within which the mobile terminal 101 and the mobile terminal 104 use the local area network, a quantity of smart devices that can be managed by the mobile terminal 101, a quantity of smart devices that can be managed by the mobile terminal 104, and the like. The processor 1203 is configured to execute some program instructions. It should be understood that, in some embodiments, the structure of the electronic device may be the same as that of an electronic device (for example, the electronic device 100 in FIG. 12A) of the mobile terminal. Therefore, the structure of the electronic device is not described herein again.

For example, as shown in FIG. 12C, a smart device includes a transceiver 1204, a memory 1205, and a processor 1206. The transceiver 1204 is configured to receive and send a message and support communication between smart devices. The memory 1205 is configured to store usage information of the smart device. The processor 1206 is configured to execute some program instructions. It should be understood that, in some embodiments, the structure of the electronic device may be the same as that of an electronic device (for example, the electronic device 100 in FIG. 12A) of a mobile terminal. Therefore, the structure of the electronic device is not described herein again.

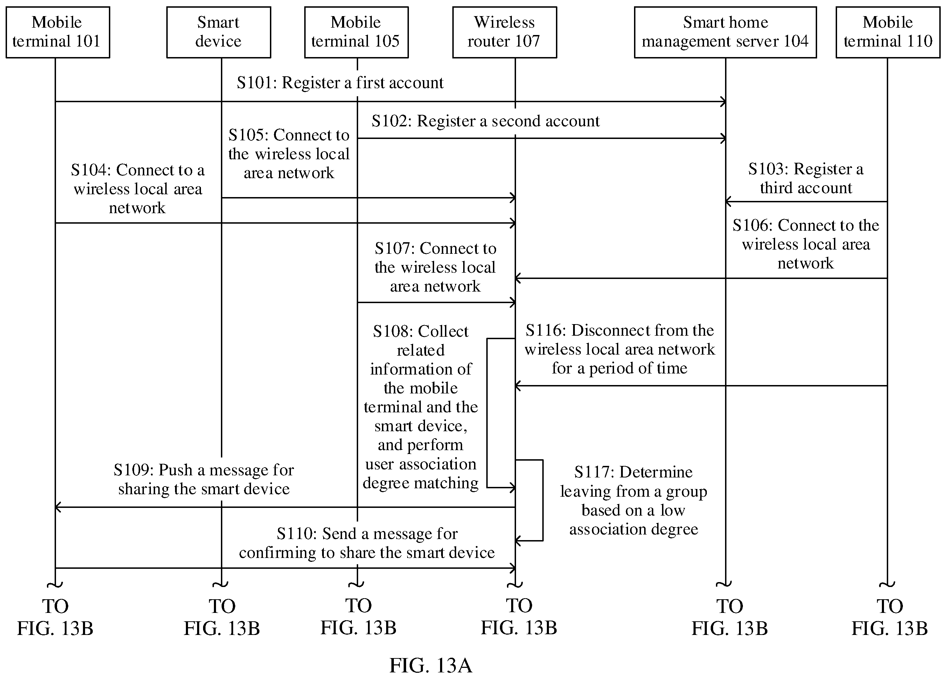

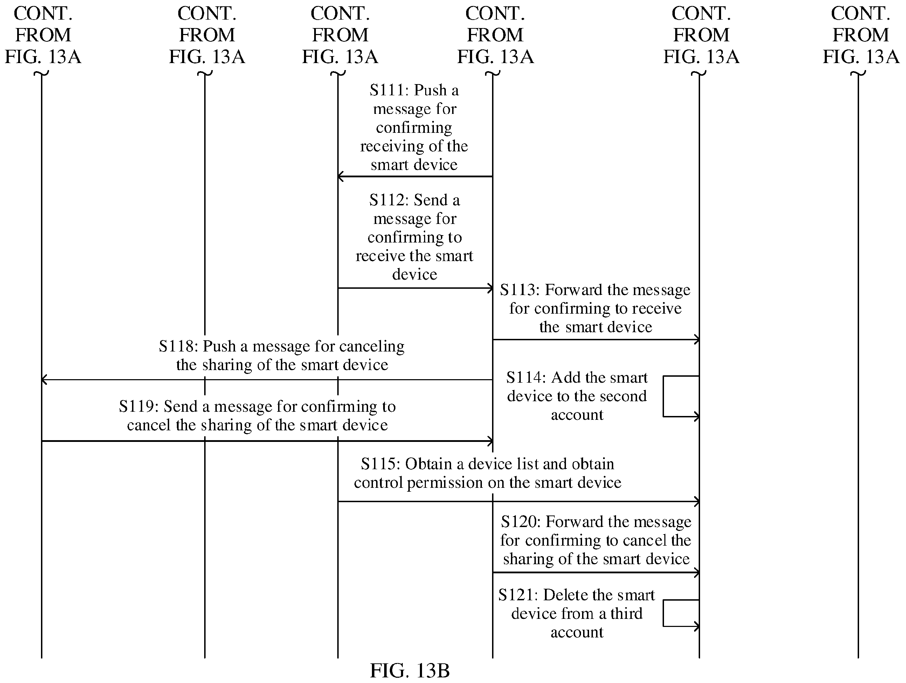

This application provides a method for sharing management permission on a smart device. For example, as shown in FIG. 13A and FIG. 13B, a mobile terminal 101, a smart device, a mobile terminal 104, a router 105, a smart device management server 106, and a mobile terminal 110 are included in the method. Step S101: The mobile terminal 101 registers a first account with the smart device management server 106. Step S102: The mobile terminal 104 registers a second account with the smart device management server 106. Step S103: The mobile terminal 110 registers a third account with the smart device management server 106. A device list of the third account includes the smart device. To be specific, the mobile terminal 110 has permission to control the smart device, and the control permission is shared by the mobile terminal 101. Step S105: The mobile terminal 101 is connected to a wireless local area network established by the router 105. The mobile terminal 101 has permission to control the smart device, and the permission is manager permission. Step S105: The smart device is connected to the wireless local area network. The smart device may be controlled by the mobile terminal 101 and the mobile terminal 110. Step S106: The mobile terminal 110 is connected to the wireless local area network, and has the permission to control the smart device. The permission is shared use permission. Step S107: The mobile terminal 104 is connected to the wireless local area network. In step S107, the mobile terminal 104 has no permission to control the smart device. Step S108: The router 105 collects a time point and duration at and within which the mobile terminal 101, the mobile terminal 104, and the mobile terminal 110 are connected to the wireless local area network, collects information about instructions that are for controlling the smart device and that are sent by the mobile terminal 101 and the mobile terminal 110, stores the information, and performs association degree matching. If an association degree between duration within which the mobile terminal 101 uses the wireless local area network and duration within which the mobile terminal 104 uses the wireless local area network is greater than a threshold, step S109 is performed. Step S109: The router 105 pushes a message for sharing the smart device to the mobile terminal 101. If the mobile terminal 101 receives an operation of a user, and confirms to share the smart device, step S110 is performed. Step S110: The mobile terminal 110 sends a message for confirming to share the smart device to the router 105. Step S111: The router 105 forwards the message for confirming to share the smart device to the mobile terminal 104. If the mobile terminal 104 receives an operation of a user, and confirms to receive shared control permission on the smart device, step S112 is performed. Step S112: The mobile terminal 104 sends a message for confirming to receive the shared control permission on the smart device to the router 105. Step S113: The router 105 forwards the message for confirming to receive the shared control permission on the smart device to the smart device management server 106. Step S114: The smart device management server 106 adds a device serial number of the smart device to a device list of the second account after receiving the message for confirming to receive the shared control permission on the smart device. Step S115: The mobile terminal 104 obtains a latest device list from the smart device management server 106, and obtains the control permission on the smart device. Step S116: The mobile terminal 110 is disconnected from the wireless local area network for a period of time. Step S117: The router 105 collects the time point and the duration at and within which the mobile terminal 101 and the mobile terminal 110 are connected to the wireless local area network, and performs user association degree matching. If an association degree is less than a threshold, it is considered that the mobile terminal 110 leaves a group including the mobile terminal 110 and the mobile terminal 101, and step S118 is performed. Step S118: The router 105 pushes a message for canceling the sharing of the smart device to the mobile terminal 101. Step S119: The mobile terminal 101 receives an operation of the user, confirms to cancel the sharing of the smart device, and sends a message for confirming to cancel the sharing of the smart device to the router 105. Step S120: The router 105 forwards the message for confirming to cancel the sharing of the smart device to the smart device management server 106. Step S121: The smart device management server 106 deletes information about the smart device in the third account after receiving the message for confirming to cancel the sharing of the smart device, and the mobile terminal 110 loses the control permission on the smart device.

According to the method for sharing management permission on a smart device provided in this application, a time point and duration at and within which mobile terminals in a same group are connected to a wireless local area network are collected and stored, and then user association degree matching is performed. If a matching degree is greater than a threshold, a wireless router pushes a message for sharing a smart device to the mobile terminal. If a matching degree is less than a threshold, the router pushes a message for canceling sharing of a smart device to the mobile terminal. In this way, steps of sharing the smart device are reduced, and the sharing of the smart device can be completed or canceled only by completing a confirmation operation once, to improve user experience. In the foregoing method, the router intercepts a part of sensitive data such as the time point at which the mobile terminal is connected to the wireless local area network and an instruction for controlling the smart device, performs anonymization and encryption processing, and then stores the data in a local cache of the router. The data is not uploaded to a cloud server. Therefore, the foregoing method can also protect private data of a user, prevent leakage of the private data, resolve a problem that user privacy can be controlled by a device manufacturer in the conventional technology, and improve security of an entire smart home system.

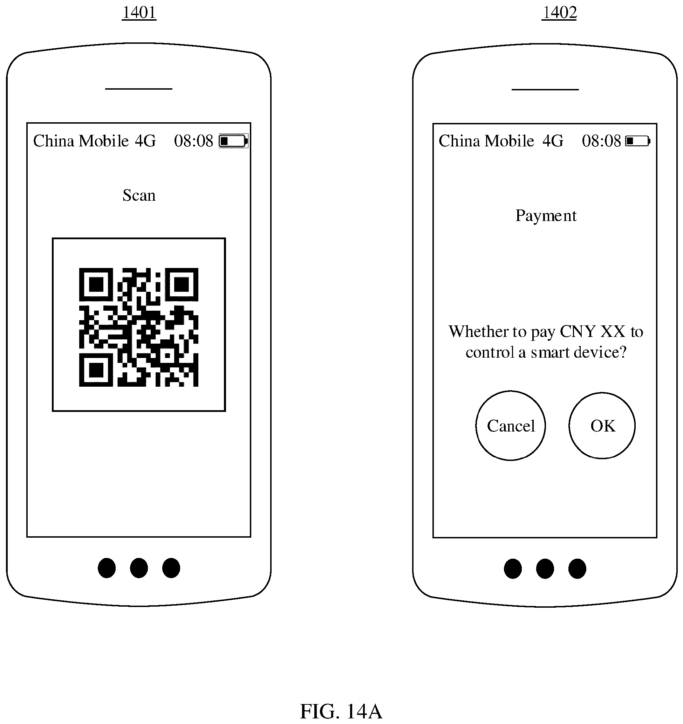

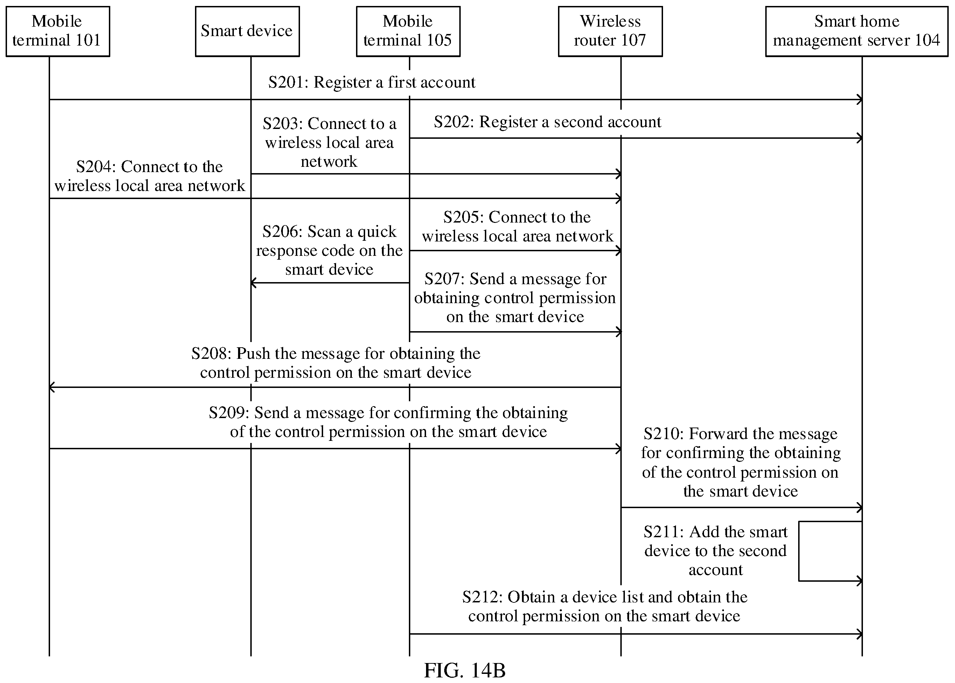

In some embodiments, this application further provides a method for sharing management permission on a smart device. For example, as shown in FIG. 14B, a user may obtain a control permission on a smart device by scanning a quick response code of the smart device by using a mobile terminal. A mobile terminal 101, the smart device, a mobile terminal 104, a router 105, and a smart device management server 106 are included in the method. Step S201 to step S205 are the same as those in the method shown in FIG. 13A and FIG. 13B. Details are not described herein again. Step S206: The mobile terminal 104 scans the quick response code on the smart device. As shown by 1401 in FIG. 14A, a "scan" function of an application on the mobile terminal 104 may be used. After the quick response code of the smart device is scanned, an interface shown by 1402 in FIG. 14A is displayed on a touchscreen of the mobile terminal 104, and the mobile terminal 104 needs to receive an operation of a user. If the user taps an "OK" button and completes online payment (for example, WeChat payment, Alipay payment, or UnionPay payment), the mobile terminal 104 receives a tapping operation of the user, and step S207 is performed. Step S207: After completing the payment, the mobile terminal 104 sends a message for obtaining the control permission on the smart device to the router 105. Step S208: The router 105 pushes the message for obtaining the control permission on the smart device to the mobile terminal 101. Step S209: The mobile terminal 101 receives an operation of tapping an "OK" button by a user, and sends a message for confirming the obtaining of the control permission on the smart device to the router 105. Step S210: The router 105 forwards the message for confirming the obtaining of the control permission on the smart device to the smart device management server 106. Step S211: The smart device management server 106 adds a device serial number of the smart device to a second account after receiving the message for confirming the obtaining of the control permission on the smart device. Step S212: The mobile terminal 104 obtains a latest device list from the smart device management server 106, and obtains the control permission on the smart device.

The foregoing method for sharing management permission on a smart device may be applied to a scenario, for example, a hotel, an inn, or a homestay. A user may obtain control permission on a smart device by scanning a quick response code and paying a specific amount of money. A manager of the hotel, the inn, or the homestay may simply share management permission on the smart device and gain a profit. This manner of sharing the management permission on the smart device is quick and convenient. Many steps are reduced, an economic income of the hotel, the inn, or the homestay is increased, and user experience is improved.

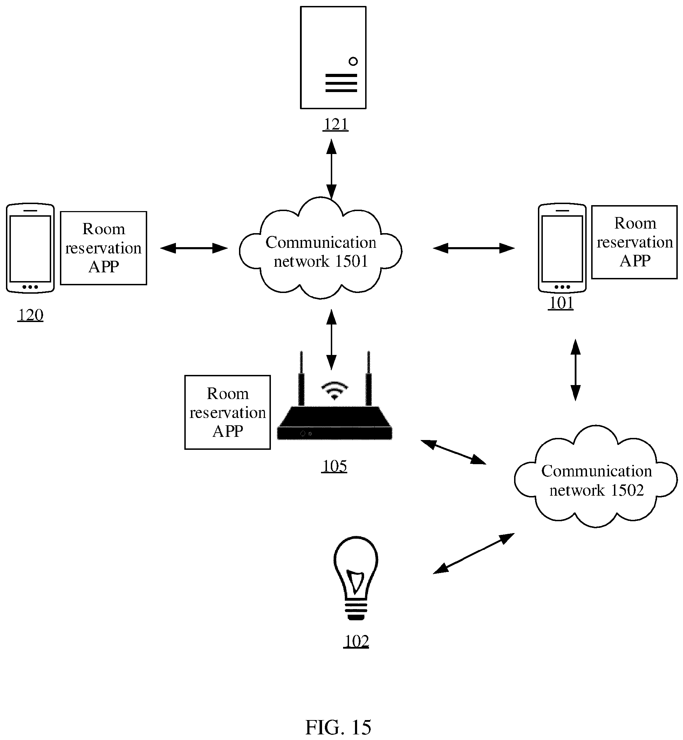

In a possible embodiment, for example, as shown in FIG. 15, a mobile terminal 120, an application server 121, a room reservation APP, a mobile terminal 101, a router 105, a smart device 102, a communication network 1501, and a communication network 1502 are included. The room reservation APP is installed on the mobile terminal 120, and the room reservation APP may be used to reserve a room published by a landlord on the application server 121. The application server 121 may be configured to manage room resource information published by the landlord and reservation information of a lodger, and may further push a notification and information, for example, information, for example, a reservation success, a reservation failure, or room resource publishing, to a mobile terminal or a router on which the room reservation APP is installed. The room reservation APP includes a lodger use mode, a landlord use mode, and a router mode. In the lodger use mode, the lodger may query a room source, initiate a room reservation, and receive the notification and the information that are pushed by the application server 121. In the landlord use mode, the landlord may publish a room source, and receive the notification and the information that are pushed by the application server 121. In the router mode, the router may receive the notification and the information that are pushed by the application server 121, and send prompt information for prompting the landlord to share the smart device. The router 105 may be connected to the mobile terminal 101 and the smart device 102 through the communication network 1502. The communication network 1502 may be a wireless local area network, and may use a Wi-Fi protocol, a Bluetooth protocol, a ZigBee protocol, or the like. The communication network 101 may be a cellular network or a wide area network. The mobile terminal 120 may be connected to the application server 121 and the mobile terminal 101 through the communication network 101. The landlord publishes, on the application server 121, a room source with the smart device 102. The lodger reserves the room source on the room reservation APP on the mobile terminal 120, and sends request information to the application server 121 to request the landlord to provide an accommodation service. The application server 121 sends the request information to the mobile terminal 101 and the router 105. The room reservation APP running on the mobile terminal 101 and the router 105 may respond to the request information. The router 105 sends prompt information to the mobile terminal 101 based on the request information, to prompt the mobile terminal 101 to share management permission on the smart device 102 with the mobile terminal 120. The mobile terminal 101 may pop up the prompt information to prompt the mobile terminal 101 to share the management permission on the smart device 102 with the mobile terminal 120. The mobile terminal 101 may send reservation sharing information to the router 105 after confirming the prompt information. The reservation sharing information is information that is about sharing of the smart device and that is sent by the router 105 to the mobile terminal 120 when the mobile terminal 120 is connected to the communication network 1502. After receiving the reservation sharing information, the router 105 shares the management permission on the smart device 102 with the mobile terminal 120 when the mobile terminal 120 is connected to the communication network 1502. It may be understood that the router configures the management permission on the smart device 102 for the mobile terminal 120 based on the reservation sharing information after a specific condition is met. For example, the mobile terminal 120 may have the management permission on the smart device 102 from 14:00 on December 17, 2019 to 12:00 on December 18, 2019.

According to context, the term "when..." or "after..." used in the foregoing embodiments may be interpreted as a meaning of "if...", "after...", "in response to determining...", or "in response to detecting...". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)". In addition, in the foregoing embodiments, relationship terms such as first and second are used to distinguish one entity from another entity, but do not limit any actual relationship and sequence between these entities.

All or some of the foregoing embodiments may be implemented by software, hardware, firmware, or any combination thereof. When software is used to implement the foregoing embodiments, all or some of the embodiments may be implemented in a form of a computer program product. The computer program product includes one or more computer instructions. When the computer program instructions are loaded and executed on a computer, the procedures or functions according to embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1.   A smart device management network device, comprising:

   one or more processors (1203, 1206); and
   a memory (1202, 1205), wherein
   the memory stores a computer program, the computer program comprises instructions, and when the instructions are executed by the one or more processors, the network device is enabled to:

      be connected to a first mobile terminal;
      be connected to a second mobile terminal;
      be connected to a smart device, wherein the first mobile terminal manages the smart device by using the network device; and
      send prompt information to the first mobile terminal based on obtained first network information of the first mobile terminal or obtained second network information of the second mobile terminal, wherein the prompt information is used to prompt the first mobile terminal whether to share management permission on the smart device with the second mobile terminal; wherein the first network information comprises first connection information generated when the first mobile terminal is connected to the network device, and the second network information comprises second connection information generated when the second mobile terminal is connected to the network device; wherein each of the first connection information and the second connection information comprises a connection time point and connection duration; and
      when the instructions are executed by the one or more processors, the network device is further enabled to:
      send the prompt information to the first mobile terminal based on the first connection information and the second connection information, wherein the prompt information is used to prompt the first mobile terminal whether to share the management permission on the smart device with the second mobile terminal.

2.   The network device according to claim 1, wherein
   when the instructions are executed by the one or more processors, the network device is further enabled to:
   the sending the prompt information to the first mobile terminal based on the first connection information and the second connection information specifically comprises:

determine whether a similarity between the first connection information and the second connection information reaches a first threshold; and
send the prompt information to the first mobile terminal when the similarity reaches the first threshold.

3. The network device according to claim 1, wherein

the first network information comprises the first connection information generated when the first mobile terminal is connected to the network device; and
when the instructions are executed by the one or more processors, the network device is further enabled to:
send the prompt information to the first mobile terminal based on the first connection information, wherein the prompt information is used to prompt whether to share the management permission on the smart device with the second mobile terminal.

4. The network device according to claim 1, wherein

the second network information comprises the second connection information generated when the second mobile terminal is connected to the network device; and
when the instructions are executed by the one or more processors, the network device is further enabled to:
send the prompt information to the first mobile terminal based on the second connection information, wherein the prompt information is used to prompt the first mobile terminal whether to share the management permission on the smart device with the second mobile terminal.

5. The network device according to claim 3, wherein when the instructions are executed by the one or more processors, the network device is further enabled to:
the sending the prompt information to the first mobile terminal based on the second connection information specifically comprises:
send the prompt information to the first mobile terminal when the second connection information meets a specific condition.

6. The network device according to claim 1, wherein

the first network information comprises confirmation information, and the confirmation information is order information of an online accommodation reservation; and
when the instructions are executed by the one or more processors, the network device is further enabled to:
the sending the prompt information to the first mobile terminal based on the confirmation information is specifically:
receive the confirmation information, and send the prompt information to the first mobile terminal based on the confirmation information, wherein the prompt information is used to prompt whether to share the management permission on the smart device with the second mobile terminal.

7. The network device according to claim 2, wherein

the first connection information comprises confirmation information; and
when the instructions are executed by the one or more processors, the network device is further enabled to:
the sending the prompt information to the first mobile terminal based on the confirmation information is specifically:
receive the confirmation information, and send the prompt information to the first terminal based on the confirmation information, wherein the prompt information is used to prompt whether to share the management permission on the smart device with the second mobile terminal.

8. A smart device management method, wherein

a first mobile terminal (101) is connected to a network device, a second mobile terminal (104) is connected to the network device, a smart device (102) is connected to the network device, and the first mobile terminal manages the smart device by using the network device; and
the method comprises: sending, by the network device, prompt information to the first mobile terminal based on obtained first network information of the first mobile terminal or obtained second network information of the second mobile terminal, wherein the prompt information is used to prompt the first mobile terminal whether to share management permission on the smart device with the second mobile terminal; wherein
the first network information comprises first connection information generated when the first mobile terminal is connected to the network device, and the second network information comprises second connection information generated when the second mobile terminal is connected to the network device; wherein each of the first connection information and the second connection information comprises a connection time point and connection duration; and
the method comprises: sending, by the network device, the prompt information to the first mobile terminal based on the first connection information and the second connection information, wherein the prompt information is used to prompt the first mobile terminal whether to share the management permission on the smart device with the second mobile terminal.

9. The method according to claim 8, wherein
the sending, by the network device, the prompt information to the first mobile terminal based on the first connection information and the second connection information specifically comprises:

determining whether a similarity between the first connection information and the second connection information reaches a first threshold; and
sending, by the network device, the prompt information to the first mobile terminal when the similarity reaches the first threshold.

10. The method according to claim 8, wherein

the first network information comprises the first connection information generated when the first mobile terminal is connected to the network device; and
the method comprises: sending, by the network device, the prompt information to the first mobile terminal based on the first connection information, wherein the prompt information is used to prompt whether to share the management permission on the smart device with the second mobile terminal.

11. The method according to claim 8, wherein

the second network information comprises the second connection information generated when the second mobile terminal is connected to the network device; and
the method comprises: sending, by the network device, the prompt information to the first mobile terminal based on the second connection information, wherein the prompt information is used to prompt the first mobile terminal whether to share the management permission on the smart device with the second mobile terminal.

12. The method according to claim 11, wherein
the sending, by the network device, the prompt information to the first mobile terminal based on the second connection information specifically comprises:
sending, by the network device, the prompt information to the first mobile terminal when the second connection information meets a specific condition.

13. The method according to claim 8, wherein

the first network information comprises confirmation information, and the confirmation information is order information of an online accommodation reservation;
a first application is installed on the first mobile terminal, the first application is installed on the second mobile terminal, the first application is used to provide an online accommodation reservation, the second mobile terminal sends the confirmation information to an application server through the second communication network, the application server receives the confirmation information, and sends the confirmation information to the first mobile terminal, and the first mobile terminal receives the confirmation information, and sends the confirmation information to the network device; and
the sending, by the network device, the prompt information to the first mobile terminal based on the first network information is specifically:
receiving, by the network device, the confirmation information, and sending the prompt information to the first mobile terminal based on the confirmation information.

**Patentansprüche**

1. Netzwerkgerät zur Verwaltung eines intelligenten Geräts, umfassend:

   einen oder mehrere Prozessoren (1203, 1206); und
   einen Speicher (1202, 1205), wobei
   der Speicher ein Computerprogramm speichert, das Computerprogramm Anweisungen umfasst, und wenn die Anweisungen durch den einen oder die mehreren Prozessoren ausgeführt werden, das Netzwerkgerät in die Lage versetzt wird zum:

   Verbunden werden mit einem ersten mobilen Endgerät;
   Verbunden werden mit einem zweiten mobilen Endgerät;
   Verbunden werden mit einem intelligenten Gerät, wobei das erste mobile Endgerät das intelligente Gerät unter Verwendung des Netzwerkgeräts verwaltet; und
   Senden von Anfrageinformationen an das erste mobile Endgerät basierend auf erlangten ersten Netzwerkinformationen des ersten mobilen Endgeräts oder erlangten zweiten Netzwerkinformationen des zweiten mobilen Endgeräts, wobei die Anfrageinformationen verwendet werden, das erste mobile Endgerät anzufragen, ob eine Verwaltungsberechtigung für das intelligente Gerät mit dem zweiten mobilen Endgerät geteilt werden soll; wobei die ersten Netzwerkinformationen erste Verbindungsinformationen umfassen, die erzeugt werden, wenn das erste mobile Endgerät mit dem Netzwerkgerät verbunden ist, und die zweiten Netzwerkinformationen zweite Verbindungsinformationen umfassen, die erzeugt werden, wenn das zweite mobile Endgerät mit dem Netzwerkgerät verbunden ist;
   wobei jede der ersten Verbindungsinformationen und der zweiten Verbindungsinformationen einen Verbindungszeitpunkt und eine Verbindungsdauer umfassen; und
   wenn die Anweisungen durch den einen oder die mehreren Prozessoren ausgeführt werden, das Netzwerkgerät ferner in die Lage versetzt wird zum:
   Senden der Anfrageinformationen an das erste mobile Endgerät basierend auf den ersten Verbindungsinformationen und den zweiten Verbindungsinformationen, wobei die Anfrageinformationen verwendet werden, das erste mobile Endgerät anzufragen, ob die Verwaltungsberechtigung für das intelligente Gerät mit dem zweiten mobilen Endgerät geteilt werden soll.

2. Netzwerkgerät nach Anspruch 1, wobei
   wenn die Anweisungen durch den einen oder die mehreren Prozessoren ausgeführt werden, das Netzwerkgerät ferner in die Lage versetzt wird zum:
   das Senden der Anfrageinformationen an das erste mobile Endgerät basierend auf den ersten Verbindungsinformationen und den zweiten Verbindungsinformationen spezifisch Folgendes umfasst:

   Bestimmen, ob eine Ähnlichkeit zwischen den ersten Verbindungsinformationen und den zweiten Verbindungsinformationen einen ersten Schwellenwert erreicht; und
   Senden der Anfrageinformationen an das erste mobile Endgerät, wenn die Ähnlichkeit den ersten Schwellenwert erreicht.

3. Netzwerkgerät nach Anspruch 1, wobei

   die ersten Netzwerkinformationen die ersten Verbindungsinformationen umfassen, die erzeugt werden, wenn das erste mobile Endgerät mit dem Netzwerkgerät verbunden ist; und
   wenn die Anweisungen durch den einen oder die mehreren Prozessoren ausgeführt werden, das Netzwerkgerät ferner in die Lage versetzt wird zum:
   Senden der Anfrageinformationen an das erste mobile Endgerät basierend auf den ersten Verbindungsinformationen, wobei die Anfrageinformationen verwendet werden, anzufragen, ob die Verwaltungsberechtigung für das intelligente Gerät mit dem zweiten mobilen Endgerät geteilt werden soll.

4. Netzwerkgerät nach Anspruch 1, wobei

   die zweiten Netzwerkinformationen die zweiten Verbindungsinformationen umfassen, die erzeugt werden, wenn das zweite mobile Endgerät mit dem Netzwerkgerät verbunden ist; und
   wenn die Anweisungen durch den einen oder die mehreren Prozessoren ausgeführt werden, das Netzwerkgerät ferner in die Lage versetzt wird zum:

Senden der Anfrageinformationen an das erste mobile Endgerät basierend auf den zweiten Verbindungsinformationen, wobei die Anfrageinformationen verwendet werden, das erste mobile Endgerät anzufragen, ob die Verwaltungsberechtigung für das intelligente Gerät mit dem zweiten mobilen Endgerät geteilt werden soll.

5. Netzwerkgerät nach Anspruch 3, wobei, wenn die Anweisungen durch den einen oder die mehreren Prozessoren ausgeführt werden, das Netzwerkgerät ferner in die Lage versetzt wird zum:
das Senden der Anfrageinformationen an das erste mobile Endgerät basierend auf den zweiten Verbindungsinformationen spezifisch Folgendes umfasst:
Senden der Anfrageinformationen an das erste mobile Endgerät, wenn die zweiten Verbindungsinformationen eine spezifische Bedingung erfüllen.

6. Netzwerkgerät nach Anspruch 1, wobei

die ersten Netzwerkinformationen Bestätigungsinformationen umfassen und die Bestätigungsinformationen Auftragsinformationen einer Online-Unterkunftsreservierung sind; und
wenn die Anweisungen durch den einen oder die mehreren Prozessoren ausgeführt werden, das Netzwerkgerät ferner in die Lage versetzt wird zum:
das Senden der Anfrageinformationen an das erste mobile Endgerät basierend auf den Bestätigungsinformationen spezifisch Folgendes ist:
Empfangen der Bestätigungsinformationen und Senden der Anfrageinformationen an das erste mobile Endgerät basierend auf den Bestätigungsinformationen, wobei die Anfrageinformationen verwendet werden, anzufragen, ob die Verwaltungsberechtigung für das intelligente Gerät mit dem zweiten mobilen Endgerät geteilt werden soll.

7. Netzwerkgerät nach Anspruch 2, wobei

die ersten Verbindungsinformationen Bestätigungsinformationen umfassen; und
wenn die Anweisungen durch den einen oder die mehreren Prozessoren ausgeführt werden, das Netzwerkgerät ferner in die Lage versetzt wird zum:
das Senden der Anfrageinformationen an das erste mobile Endgerät basierend auf den Bestätigungsinformationen spezifisch Folgendes ist:
Empfangen der Bestätigungsinformationen und Senden der Anfrageinformationen an das erste Endgerät basierend auf den Bestätigungsinformationen, wobei die Anfrageinformationen verwendet werden, anzufragen, ob die Verwaltungsberechtigung für das intelligente Gerät mit dem zweiten mobilen Endgerät geteilt werden soll.

8. Verfahren zur Verwaltung eines intelligenten Geräts, wobei

ein erstes mobiles Endgerät (101) mit einem Netzwerkgerät verbunden ist, ein zweites mobiles Endgerät (104) mit dem Netzwerkgerät verbunden ist, ein intelligentes Gerät (102) mit dem Netzwerkgerät verbunden ist und das erste mobile Endgerät das intelligente Gerät unter Verwendung des Netzwerkgeräts verwaltet; und
das Verfahren Folgendes umfasst: Senden, durch das Netzwerkgerät, von Anfrageinformationen an das erste mobile Endgerät basierend auf erlangten ersten Netzwerkinformationen des ersten mobilen Endgeräts oder erlangten zweiten Netzwerkinformationen des zweiten mobilen Endgeräts, wobei die Anfrageinformationen verwendet werden, das erste mobile Endgerät anzufragen, ob eine Verwaltungsberechtigung für das intelligente Gerät mit dem zweiten mobilen Endgerät geteilt werden soll; wobei
die ersten Netzwerkinformationen erste Verbindungsinformationen umfassen, die erzeugt werden, wenn das erste mobile Endgerät mit dem Netzwerkgerät verbunden ist, und die zweiten Netzwerkinformationen zweite Verbindungsinformationen umfassen, die erzeugt werden, wenn das zweite mobile Endgerät mit dem Netzwerkgerät verbunden ist; wobei jede der ersten Verbindungsinformationen und der zweiten Verbindungsinformationen einen Verbindungszeitpunkt und eine Verbindungsdauer umfassen; und
das Verfahren Folgendes umfasst: Senden, durch das Netzwerkgerät, der Anfrageinformationen an das erste mobile Endgerät basierend auf den ersten Verbindungsinformationen und den zweiten Verbindungsinformationen, wobei die Anfrageinformationen verwendet werden, das erste mobile Endgerät anzufragen, ob die Verwaltungsberechtigung für das intelligente Gerät mit dem zweiten mobilen Endgerät geteilt werden soll.

9. Verfahren nach Anspruch 8, wobei
das Senden, durch das Netzwerkgerät, der Anfrageinformationen an das erste mobile Endgerät basierend auf den ersten Verbindungsinformationen und den zweiten Verbindungsinformationen spezifisch Folgendes umfasst:

Bestimmen, ob eine Ähnlichkeit zwischen den ersten Verbindungsinformationen und den zweiten Verbindungsinformationen einen ersten Schwellenwert erreicht; und

Senden, durch das Netzwerkgerät, der Anfrageinformationen an das erste mobile Endgerät, wenn die Ähnlichkeit den ersten Schwellenwert erreicht.

**10.** Verfahren nach Anspruch 8, wobei

die ersten Netzwerkinformationen die ersten Verbindungsinformationen umfassen, die erzeugt werden, wenn das erste mobile Endgerät mit dem Netzwerkgerät verbunden ist; und

das Verfahren Folgendes umfasst: Senden, durch das Netzwerkgerät, der Anfrageinformationen an das erste mobile Endgerät basierend auf den ersten Verbindungsinformationen, wobei die Anfrageinformationen verwendet werden, anzufragen, ob die Verwaltungsberechtigung für das intelligente Gerät mit dem zweiten mobilen Endgerät geteilt werden soll.

**11.** Verfahren nach Anspruch 8, wobei

die zweiten Netzwerkinformationen die zweiten Verbindungsinformationen umfassen, die erzeugt werden, wenn das zweite mobile Endgerät mit dem Netzwerkgerät verbunden ist; und

das Verfahren Folgendes umfasst: Senden, durch das Netzwerkgerät, der Anfrageinformationen an das erste mobile Endgerät basierend auf den zweiten Verbindungsinformationen, wobei die Anfrageinformationen verwendet werden, das erste mobile Endgerät anzufragen, ob die Verwaltungsberechtigung für das intelligente Gerät mit dem zweiten mobilen Endgerät geteilt werden soll.

**12.** Verfahren nach Anspruch 11, wobei

das Senden, durch das Netzwerkgerät, der Anfrageinformationen an das erste mobile Endgerät basierend auf den zweiten Verbindungsinformationen spezifisch Folgendes umfasst:

Senden, durch das Netzwerkgerät, der Anfrageinformationen an das erste mobile Endgerät, wenn die zweiten Verbindungsinformationen eine spezifische Bedingung erfüllen.

**13.** Verfahren nach Anspruch 8, wobei

die ersten Netzwerkinformationen Bestätigungsinformationen umfassen und die Bestätigungsinformationen Auftragsinformationen einer Online-Unterkunftsreservierung sind;

eine erste Anwendung auf dem ersten mobilen Endgerät installiert ist, die erste Anwendung auf dem zweiten mobilen Endgerät installiert ist, die erste Anwendung verwendet wird, eine Online-Unterkunftsreservierung bereitzustellen, das zweite mobile Endgerät die Bestätigungsinformationen an einen Anwendungsserver durch das zweite Kommunikationsnetzwerk sendet, der Anwendungsserver die Bestätigungsinformationen empfängt und die Bestätigungsinformationen an das erste mobile Endgerät sendet und das erste mobile Endgerät die Bestätigungsinformationen empfängt und die Bestätigungsinformationen an das Netzwerkgerät sendet; und

das Senden, durch das Netzwerkgerät, der Anfrageinformationen an das erste mobile Endgerät basierend auf den ersten Netzwerkinformationen spezifisch Folgendes ist:

Empfangen, durch das Netzwerkgerät, der Bestätigungsinformationen und Senden der Anfrageinformationen an das erste mobile Endgerät basierend auf den Bestätigungsinformationen.

**Revendications**

**1.** Dispositif de réseau de gestion de dispositif intelligent, comprenant :

un ou plusieurs processeurs (1203, 1206) ; et

une mémoire (1202, 1205), la mémoire stockant un programme informatique, le programme informatique comprenant des instructions, et lorsque les instructions sont exécutées par le ou les processeurs, le dispositif de réseau étant activé pour :

être connecté à un premier terminal mobile ;

être connecté à un second terminal mobile ;

être connecté à un dispositif intelligent, le premier terminal mobile gérant le dispositif intelligent à l'aide du dispositif de réseau ; et

envoyer des informations d'invite au premier terminal mobile sur la base de premières informations de réseau obtenues du premier terminal mobile ou de secondes informations de réseau obtenues du second terminal mobile, les informations d'invite étant utilisées pour inviter le premier terminal mobile à partager ou non l'autorisation de gestion sur le dispositif intelligent avec le second terminal mobile ; les premières informations de réseau comprenant des premières informations de connexion générées lorsque le premier terminal mobile est connecté au dispositif de réseau, et les secondes informations de réseau comprenant des secondes informations de connexion générées lorsque le second terminal mobile est connecté au dispositif de réseau ; chacune des premières informations de connexion et des secondes informations de connexion comprenant un point temporel de connexion et une durée de connexion ; et

lorsque les instructions sont exécutées par le ou les processeurs, le dispositif de réseau étant en outre activé pour :

envoyer les informations d'invite au premier terminal mobile sur la base des premières informations de connexion et des secondes informations de connexion, les informations d'invite étant utilisées pour inviter le premier terminal mobile à partager ou non l'autorisation de gestion sur le dispositif intelligent avec le second terminal mobile.

2. Dispositif de réseau selon la revendication 1,
lorsque les instructions sont exécutées par le ou les processeurs, le dispositif de réseau étant en outre activé pour :
l'envoi des informations d'invite au premier terminal mobile sur la base des premières informations de connexion et des secondes informations de connexion comprenant spécifiquement:

déterminer si une similarité entre les premières informations de connexion et les secondes informations de connexion atteint un premier seuil ; et
envoyer les informations d'invite au premier terminal mobile lorsque la similarité atteint le premier seuil.

3. Dispositif de réseau selon la revendication 1,

les premières informations de réseau comprenant les premières informations de connexion générées lorsque le premier terminal mobile est connecté au dispositif de réseau ; et
lorsque les instructions sont exécutées par le ou les processeurs, le dispositif de réseau étant en outre activé pour :
envoyer les informations d'invite au premier terminal mobile sur la base des premières informations de connexion, les informations d'invite étant utilisées pour inviter à partager ou non l'autorisation de gestion sur le dispositif intelligent avec le second terminal mobile.

4. Dispositif de réseau selon la revendication 1,

les secondes informations de réseau comprenant les secondes informations de connexion générées lorsque le second terminal mobile est connecté au dispositif de réseau ; et
lorsque les instructions sont exécutées par le ou les processeurs, le dispositif de réseau étant en outre activé pour :
envoyer les informations d'invite au premier terminal mobile sur la base des secondes informations de connexion, les informations d'invite étant utilisées pour inviter le premier terminal mobile à partager ou non l'autorisation de gestion sur le dispositif intelligent avec le second terminal mobile.

5. Dispositif de réseau selon la revendication 3, lorsque les instructions sont exécutées par le ou les processeurs, le dispositif de réseau étant en outre activé pour :
l'envoi des informations d'invite au premier terminal mobile sur la base des secondes informations de connexion comprenant spécifiquement :
envoyer les informations d'invite au premier terminal mobile lorsque les secondes informations de connexion répondent à une condition spécifique.

6. Dispositif de réseau selon la revendication 1,

les premières informations de réseau comprenant des informations de confirmation, et les informations de confirmation étant des informations de commande d'une réservation d'hébergement en ligne ; et
lorsque les instructions sont exécutées par le ou les processeurs, le dispositif de réseau étant en outre activé pour :

l'envoi des informations d'invite au premier terminal mobile sur la base des informations de confirmation étant spécifiquement :

recevoir les informations de confirmation, et envoyer les informations d'invite au premier terminal mobile sur la base des informations de confirmation, les informations d'invite étant utilisées pour inviter à partager ou non l'autorisation de gestion sur le dispositif intelligent avec le second terminal mobile.

7.  Dispositif de réseau selon la revendication 2,

les premières informations de connexion comprenant des informations de confirmation ; et

lorsque les instructions sont exécutées par le ou les processeurs, le dispositif de réseau étant en outre activé pour :

l'envoi des informations d'invite au premier terminal mobile sur la base des informations de confirmation étant spécifiquement :

recevoir les informations de confirmation, et envoyer les informations d'invite au premier terminal sur la base des informations de confirmation, les informations d'invite étant utilisées pour inviter à partager ou non l'autorisation de gestion sur le dispositif intelligent avec le second terminal mobile.

8.  Procédé de gestion de dispositif intelligent,

un premier terminal mobile (101) étant connecté à un dispositif de réseau, un second terminal mobile (104) étant connecté au dispositif de réseau, un dispositif intelligent (102) étant connecté au dispositif de réseau, et le premier terminal mobile gérant le dispositif intelligent à l'aide du dispositif de réseau ; et

le procédé comprenant : l'envoi, par le dispositif de réseau, d'informations d'invite au premier terminal mobile sur la base de premières informations de réseau obtenues du premier terminal mobile ou de secondes informations de réseau obtenues du second terminal mobile, les informations d'invite étant utilisées pour inviter le premier terminal mobile à partager ou non l'autorisation de gestion sur le dispositif intelligent avec le second terminal mobile ;

les premières informations de réseau comprenant des premières informations de connexion générées lorsque le premier terminal mobile est connecté au dispositif de réseau, et les secondes informations de réseau comprenant des secondes informations de connexion générées lorsque le second terminal mobile est connecté au dispositif de réseau ; chacune des premières informations de connexion et des secondes informations de connexion comprenant un point temporel de connexion et une durée de connexion ; et

le procédé comprenant : l'envoi, par le dispositif de réseau, des informations d'invite au premier terminal mobile sur la base des premières informations de connexion et des secondes informations de connexion, les informations d'invite étant utilisées pour inviter le premier terminal mobile à partager ou non l'autorisation de gestion sur le dispositif intelligent avec le second terminal mobile.

9.  Procédé selon la revendication 8,
l'envoi, par le dispositif de réseau, des informations d'invite au premier terminal mobile sur la base des premières informations de connexion et des secondes informations de connexion comprenant spécifiquement :

la détermination si une similarité entre les premières informations de connexion et les secondes informations de connexion atteint un premier seuil ; et

l'envoi, par le dispositif de réseau, des informations d'invite au premier terminal mobile lorsque la similarité atteint le premier seuil.

10. Procédé selon la revendication 8,

les premières informations de réseau comprenant les premières informations de connexion générées lorsque le premier terminal mobile est connecté au dispositif de réseau ; et

le procédé comprenant : l'envoi, par le dispositif de réseau, des informations d'invite au premier terminal mobile sur la base des premières informations de connexion, les informations d'invite étant utilisées pour inviter à partager ou non l'autorisation de gestion sur le dispositif intelligent avec le second terminal mobile.

11. Procédé selon la revendication 8,

les secondes informations de réseau comprenant les secondes informations de connexion générées lorsque le second terminal mobile est connecté au dispositif de réseau ; et

le procédé comprenant : l'envoi, par le dispositif de réseau, des informations d'invite au premier terminal mobile sur la base des secondes informations de connexion, les informations d'invite étant utilisées pour inviter le premier terminal mobile à partager ou non l'autorisation de gestion sur le dispositif intelligent avec le second terminal mobile.

**12.** Procédé selon la revendication 11,
l'envoi, par le dispositif de réseau, des informations d'invite au premier terminal mobile sur la base des secondes informations de connexion comprenant spécifiquement :
l'envoi, par le dispositif de réseau, des informations d'invite au premier terminal mobile lorsque les secondes informations de connexion répondent à une condition spécifique.

**13.** Procédé selon la revendication 8,

les premières informations de réseau comprenant des informations de confirmation, et les informations de confirmation étant des informations de commande d'une réservation d'hébergement en ligne ;
une première application étant installée sur le premier terminal mobile, la première application étant installée sur le second terminal mobile, la première application étant utilisée pour fournir une réservation d'hébergement en ligne, le second terminal mobile envoyant les informations de confirmation à un serveur d'application par l'intermédiaire du second réseau de communication, le serveur d'application recevant les informations de confirmation, et envoyant les informations de confirmation au premier terminal mobile, et le premier terminal mobile recevant les informations de confirmation, et envoyant les informations de confirmation au dispositif de réseau ; et l'envoi, par le dispositif de réseau, des informations d'invite au premier terminal mobile sur la base des premières informations de réseau étant spécifiquement :
la réception, par le dispositif de réseau, des informations de confirmation, et l'envoi des informations d'invite au premier terminal mobile sur la base des informations de confirmation.

100

101

Communication
network 103

102

## FIG. 1

100

101

Communication
network 103

102

104

## FIG. 2

FIG. 3

100

FIG. 4

FIG. 5

601

China Mobile 4G          08:08

Share with a user XXX

Smart bulb

Cancel          OK

602

China Mobile 4G          08:08

Permission selection

Smart bulb

Level-0 permission

Level-1 permission

Cancel          OK

FIG. 6

EP 4 068 694 B1

FIG. 7

300

FIG. 8

901

China Mobile 4G 08:08

Share with a user XXX

Smart bulb ☑

Smart socket ☑

Cancel   OK

902

China Mobile 4G 08:08

Receive what is shared by a user YYY

Smart bulb ☑

Cancel   OK

903

China Mobile 4G 08:08

Cancel what is shared with a user ZZZ

Smart bulb ☑

Cancel   OK

904

China Mobile 4G 08:08

Device of a user XXX

Shared

Smart bulb

FIG. 9

1001

| Smart bulb   Serial number: XXXXX | |
|---|---|
| User 1 | 0 (permission level) |
| User 2 | 1 (permission level) |

1002

| User 1 | |
|---|---|
| Device serial number | Permission |
| XXXXX | 0 (permission level) |

FIG. 10

| Header | REQ ID | USER ID | DEV ID | Message | Authority |
|---|---|---|---|---|---|

FIG. 11

Mobile terminal 101

Antenna 1

Antenna 2

Mobile communication module
2G/3G/4G/5G
[150]

Wireless communication module
BT/WLAN/GNSS/NFC/IR/FM
[160]

Speaker [170A]

Receiver [170B]

Microphone
[170C]

Headset jack
[170D]

Audio module [170]

Displays 1 to N [194]

Cameras 1 to N [193]

Indicator [192]

Motor [191]

Button [190]

Internal memory [121]

SIM card interfaces
1 to N [195]

External memory
interface [120]

USB interface [130]

Charging
input

Processor

[110]

Charging
management
module
[140]

Power
management
module [141]

Battery [142]

Sensor module [180]

Pressure sensor [180A]

Gyro sensor [180B]

Barometric pressure
sensor [180C]

Magnetic sensor
[180D]

Acceleration sensor
[180E]

Distance sensor [180F]

Optical proximity
sensor [180G]

Fingerprint sensor
[180H]

Temperature sensor
[180J]

Touch sensor [180K]

Ambient light sensor
[180L]

Bone conduction sensor
[180M]

FIG. 12A

Router

Transceiver 1201

Memory 1202

Processor 1203

FIG. 12B

Smart device

Transceiver 1204

Memory 1205

Processor 1206

FIG. 12C

EP 4 068 694 B1

| Mobile terminal 101 | Smart device | Mobile terminal 105 | Wireless router 107 | Smart home management server 104 | Mobile terminal 110 |

S101: Register a first account

S102: Register a second account

S105: Connect to the wireless local area network

S104: Connect to a wireless local area network

S103: Register a third account

S106: Connect to the wireless local area network

S107: Connect to the wireless local area network

S108: Collect related information of the mobile terminal and the smart device, and perform user association degree matching

S116: Disconnect from the wireless local area network for a period of time

S109: Push a message for sharing the smart device

S117: Determine leaving from a group based on a low association degree

S110: Send a message for confirming to share the smart device

| TO FIG. 13B | TO FIG. 13B | TO FIG. 13B | TO FIG. 13B | TO FIG. 13B | TO FIG. 13B |

FIG. 13A

CONT.
FROM
FIG. 13A     CONT.
FROM
FIG. 13A     CONT.
FROM
FIG. 13A     CONT.
FROM
FIG. 13A     CONT.
FROM
FIG. 13A     CONT.
FROM
FIG. 13A

S111: Push a message for confirming receiving of the smart device

S112: Send a message for confirming to receive the smart device

S113: Forward the message for confirming to receive the smart device

S118: Push a message for canceling the sharing of the smart device

S114: Add the smart device to the second account

S119: Send a message for confirming to cancel the sharing of the smart device

S115: Obtain a device list and obtain control permission on the smart device

S120: Forward the message for confirming to cancel the sharing of the smart device

S121: Delete the smart device from a third account

FIG. 13B

EP 4 068 694 B1

1401

China Mobile 4G    08:08

Scan

1402

China Mobile 4G    08:08

Payment

Whether to pay CNY XX to
control a smart device?

Cancel     OK

FIG. 14A

FIG. 14B

EP 4 068 694 B1

FIG. 15

**EP 4 068 694 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110166439 A
- CN 109756404 A
- CN 107995215 A
- CN 110336720 A